(19) Europäisches Patentamt
European Patent Office
Office européen des brevets

(11) **EP 4 682 613 A1**

(12) **EUROPEAN PATENT APPLICATION**

(43) Date of publication:
**21.01.2026 Bulletin 2026/04**

(21) Application number: **25188279.1**

(22) Date of filing: **08.07.2025**

(51) International Patent Classification (IPC):
**G02B 21/34** (2006.01)    **G02B 21/00** (2006.01)
**G06T 7/00** (2017.01)    **G02B 21/36** (2006.01)
**G06V 10/00** (2022.01)

(52) Cooperative Patent Classification (CPC):
**G02B 21/34; G02B 21/365; G02B 21/367;
G06T 7/0012; G06V 20/69;** G02B 21/0024

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.07.2024 US 202418774574**

(71) Applicant: **Pramana Inc.
Cambridge, MA 02142 (US)**

(72) Inventors:
• **Gupta, Raghubansh Bahadur
Bangalore (IN)**
• **Prateek, Rohan
Uttar Pradesh (IN)**
• **Pelluru, Pavani Pallavi
Pocharam (IN)**
• **Kaveri, Dabbu
Andhra Pradesh (IN)**
• **Jain, Prateek
Karnataka (IN)**

(74) Representative: **Shaw, Anita
Caldwell IP, Ltd
4th Floor
36 St James's Street
London SW1A 1JD (GB)**

(54) **METHODS AND APPARATUS FOR ADAPTIVE SLIDE IMAGING USING A SELECTED SCANNING PROFILE**

(57) An apparatus and method for adaptive slide imaging using a selected scanning profile is disclosed. The apparatus includes a scanner configured to capture a macro image of a slide and including a stage configured to hold the slide, an optical sensor configured to convert an image into one or more electrical signals, and an optical system configured to form the image of the slide on the optical sensor. The apparatus includes at least a processor and a memory containing instructions configuring the at least a processor to receive the macro image of the slide from the scanner, extract metadata from the macro image of the slide, determine a classification category of the slide, retrieve a scanning profile as a function of the classification category of the slide, and image, using the optical system and optical sensor of the scanner, the slide as a function of the scanning profile.

EP 4 682 613 A1

## Description

FIELD OF THE INVENTION

The present invention generally relates to the field of slide imaging. In particular, the present invention is directed to methods and apparatus for adaptive slide imaging using a selected scanning profile.

BACKGROUND

In some embodiments, when scanning medical slides, it may be desirable to choose a particular scanning profile or processing pipeline to optimize the scanning of the slide. For example, some applications may require different magnification imaging. However, having a user manually select a scanning profile for each slide or set of slides is time consuming and inefficient. If a user needs to switch profiles for each slide in a set, then the process becomes even more time consuming.

SUMMARY OF THE DISCLOSURE

In an aspect, an apparatus for adaptive slide imaging using a selected scanning profile is disclosed. The apparatus includes a scanner configured to capture a macro image of a slide. The scanner includes a stage configured to hold the slide, an optical sensor configured to convert an image into one or more electrical signals, and an optical system configured to form the image of the slide on the optical sensor, wherein the stage is configured to move the slide relative to the optical system. The apparatus further includes at least a processor and a memory, wherein the memory contains instructions configuring the at least a processor to receive the macro image of the slide from the scanner, extract metadata from the macro image of the slide, determine a classification category of the slide as a function of the metadata, retrieve a scanning profile as a function of the classification category of the slide, and image, using the optical system and optical sensor of the scanner, the slide as a function of the scanning profile. Preferably, the memory contains instructions further configuring the at least a processor to: configure, using a set of application programming interfaces, the scanner; image the slide at a macro magnification using the optical system and optical sensor of the scanner; configure, using the set of application programming interfaces, an algorithm pipeline for processing the macro image of the slide; and process the macro image of the slide using the algorithm pipeline. More preferably, retrieving the scanning profile as a function of the classification category of the slide comprises: retrieving a plurality of scanning profiles from a profile look up table; and selecting the scanning profile from the plurality of scanning profiles as a function of a plurality of weights associated with the plurality of scanning profiles.

In another aspect, a method for adaptive slide imaging using a selected scanning profile is disclosed. The method includes capturing, using a scanner, a macro image of a slide. The scanner includes a stage configured to hold the slide, an optical sensor configured to convert an image into one or more electrical signals, and an optical system configured to form the image of the slide on the optical sensor, wherein the stage is configured to move the slide relative to the optical system. The method further includes receiving, using at least a processor, the macro image of the slide from the scanner, extracting, using the at least a processor, metadata from the macro image of the slide, determining, using the at least a processor, a classification category of the slide as a function of the metadata, retrieving, using the at least a processor, a scanning profile as a function of the classification category of the slide, and imaging, using the optical system and optical sensor of the scanner, the slide as a function of the scanning profile. Preferably, the method further comprises: configuring, using the at least a processor and a set of application programming interfaces, the scanner; image the slide at a macro magnification using the optical system and optical sensor of the scanner; configuring, using the at least a processor and the set of application programming interfaces, an algorithm pipeline for processing the macro image of the slide; and processing, using the at least a processor, the macro image of the slide using the algorithm pipeline. More preferably, retrieving the scanning profile as a function of the classification category of the slide comprises: retrieving a plurality of scanning profiles from a profile look up table; and selecting the scanning profile from the plurality of scanning profiles as a function of a plurality of weights associated with the plurality of scanning profiles. Still more preferably, the scanning profile comprises: a magnification parameter; and a z-stack layer parameter; and the method further comprises imaging the slide using the scanner as a function of the magnification parameter and the z-stack layer parameter.

These and other aspects and features of non-limiting embodiments of the present invention will become apparent to those skilled in the art upon review of the following description of specific non-limiting embodiments of the invention in conjunction with the accompanying drawings.

BRIEF DESCRIPTION OF THE DRAWINGS

For the purpose of illustrating the invention, the drawings show aspects of one or more embodiments of the invention. However, it should be understood that the present invention is not limited to the precise arrangements and instrumentalities shown in the drawings, wherein:

FIG. 1 is a box diagram of an exemplary apparatus for adaptive slide imaging using a selected scanning profile;

FIG. 2 is an exemplary scanning profile diagram;
FIG. 3 is an exemplary diagram of a macro image analysis automated profile selection;
FIG. 4 is an exemplary diagram of components of scanning profiles;
FIG. 5 is a diagram of an exemplary machine-learning module;
FIG. 6 is a diagram of an exemplary neural network;
FIG. 7 is a diagram of an exemplary node of a neural network;
FIG. 8 is a flow diagram of an exemplary method or adaptive slide imaging using a selected scanning profile; and
FIG. 9 is a block diagram of a computing system that can be used to implement any one or more of the methodologies disclosed herein and any one or more portions thereof.

The drawings are not necessarily to scale and may be illustrated by phantom lines, diagrammatic representations and fragmentary views. In certain instances, details that are not necessary for an understanding of the embodiments or that render other details difficult to perceive may have been omitted.

DETAILED DESCRIPTION

At a high level, aspects of the present disclosure are directed to systems and methods for adaptive slide imaging using a selected scanning profile. In an embodiment, metadata may be used to determine a classification category for a slide. Scanning profiles for each slide may be determined using the classification category. In some embodiments, scanning profile may be used to configure a scanner. Scanner may then scan the slide using the scanning profile. In some embodiments, scanning profiles may be determined for each slide, therefore scanner may have improved chances of imaging each slide.

This invention has several benefits. For example, the use of scanning profiles allows the behavior of the scanner can be customized as per the requirements of the application using profiles. This does not require modification of the hardware or the software of the scanner. This system also allows for multiple profiles to be developed and deployed. The profiles can be switched per slide if required in an automated fashion. Additionally, this system allows for scanning profiles to be portable among scanners. For example, scanning profiles can be developed on one scanner and deployed on multiple. In some embodiments, this system may allow for different slide preparation protocols to be handled. For example scanning profiles may allow one scanner to handle multiple different slide preparation protocols. In some embodiments, system may allow for slides to be scanned as a batch even if they belong to different applications or were prepared using different protocols. The dynamic assignment of an appropriate scanning profile may allow a scanner to handle slides from different batches or slides with different protocols optimally.

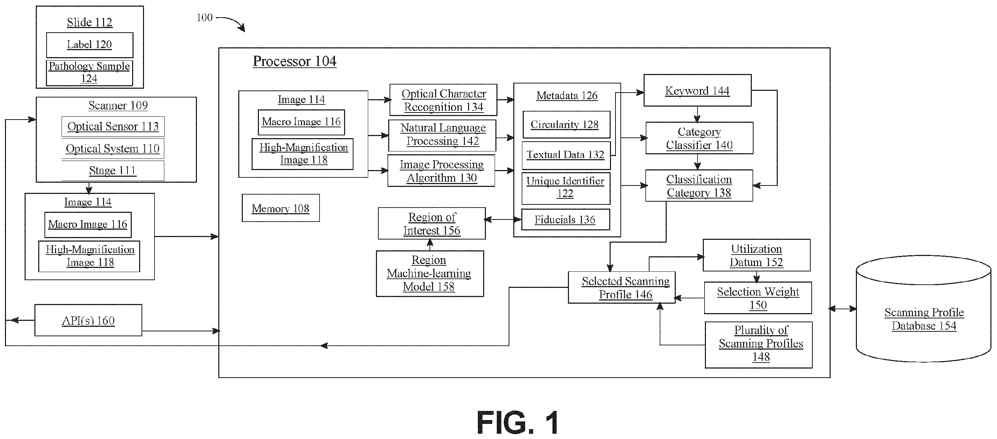

Referring now to FIG. 1, an exemplary embodiment of an apparatus 100 for adaptive slide imaging using a selected scanning profile is illustrated. Apparatus 100 includes a processor 104. In some embodiments, processor 104 may be consistent with aspects of a computing device as described in this disclosure. Computing device includes a processor communicatively connected to a memory. As used in this disclosure, "communicatively connected" means connected by way of a connection, attachment or linkage between two or more relata which allows for reception and/or transmittance of information therebetween. For example, and without limitation, this connection may be wired or wireless, direct or indirect, and between two or more components, circuits, devices, systems, and the like, which allows for reception and/or transmittance of data and/or signal(s) therebetween. Data and/or signals therebetween may include, without limitation, electrical, electromagnetic, magnetic, video, audio, radio and microwave data and/or signals, combinations thereof, and the like, among others. A communicative connection may be achieved, for example and without limitation, through wired or wireless electronic, digital or analog, communication, either directly or by way of one or more intervening devices or components. Further, communicative connection may include electrically coupling or connecting at least an output of one device, component, or circuit to at least an input of another device, component, or circuit. For example, and without limitation, via a bus or other facility for intercommunication between elements of a computing device. Communicative connecting may also include indirect connections via, for example and without limitation, wireless connection, radio communication, low power wide area network, optical communication, magnetic, capacitive, or optical coupling, and the like. In some instances, the terminology "communicatively coupled" may be used in place of communicatively connected in this disclosure.

Further referring to FIG. 1, processor 104 may include any computing device as described in this disclosure, including without limitation a microcontroller, microprocessor, digital signal processor (DSP) and/or system on a chip (SoC) as described in this disclosure. processor 104 may include, be included in, and/or communicate with a mobile device such as a mobile telephone or smartphone. processor 104 may include a single computing device operating independently, or may include two or more computing device operating in concert, in parallel, sequentially or the like; two or more computing devices may be included together in a single computing device or in two or more computing devices. processor 104 may interface or communicate with one or more additional devices as described below in further detail via a network interface device. Network interface device may be utilized for connecting processor 104 to one or more of a variety of networks, and one or more devices. Examples of a network interface device include, but are not limited to, a network interface card (*e.g.,* a mobile network interface card, a LAN card), a modem, and any combination thereof. Examples of a network include, but are not limited to, a wide area network (*e.g.*, the Internet, an enterprise network), a local area network (*e.g.*, a network associated with an office, a building, a campus or other relatively small geographic space), a telephone network, a data network associated with a telephone/voice provider (*e.g.*, a mobile communications provider data and/or voice network), a direct connection between two computing devices, and any combinations thereof. A network may employ a wired and/or a wireless mode of communication. In general, any network topology may be used. Information (*e.g.*, data, software etc.) may be communicated to and/or from a computer and/or a computing device. processor 104 may include but is not limited to, for example, a computing device or cluster of computing devices in a first location and a second computing device or cluster of computing devices in a second location. processor 104 may include one or more computing devices dedicated to data storage, security, distribution of traffic for load balancing, and the like. processor 104 may distribute one or more computing tasks as described below across a plurality of computing devices of computing device, which may operate in parallel, in series, redundantly, or in any other manner used for distribution of tasks or memory between computing devices. processor 104 may be implemented, as a non-limiting example, using a "shared nothing" architecture.

With continued reference to FIG. 1, processor 104 may be designed and/or configured to perform any method, method step, or sequence of method steps in any embodiment described in this disclosure, in any order and with any degree of repetition. For instance, processor 104 may be configured to perform a single step or sequence repeatedly until a desired or commanded outcome is achieved; repetition of a step or a sequence of steps may be performed iteratively and/or recursively using outputs of previous repetitions as inputs to subsequent repetitions, aggregating inputs and/or outputs of repetitions to produce an aggregate result, reduction or decrement of one or more variables such as global variables, and/or division of a larger processing task into a set of iteratively addressed smaller processing tasks. processor 104 may perform any step or sequence of steps as described in this disclosure in parallel, such as simultaneously and/or substantially simultaneously performing a step two or more times using two or more parallel threads, processor cores, or the like; division of tasks between parallel threads and/or processes may be performed according to any protocol suitable for division of tasks between iterations. Persons skilled in the art, upon reviewing the entirety of this disclosure, will be aware of various ways in which steps, sequences of steps, processing tasks, and/or data may be subdivided, shared, or otherwise dealt with using iteration, recursion, and/or parallel processing.

With continued reference to FIG. 1, apparatus 100 further includes a memory 108. Memory 108 may contains instructions configuring processor 104 to perform tasks disclosed in this disclosure. As used in this disclosure, "communicatively connected" means connected by way of a connection, attachment, or linkage between two or more relata which allows for reception and/or transmittance of information therebetween. For example, and without limitation, this connection may be wired or wireless, direct, or indirect, and between two or more components, circuits, devices, systems, apparatus 100, and the like, which allows for reception and/or transmittance of data and/or signal(s) therebetween. Data and/or signals therebetween may include, without limitation, electrical, electromagnetic, magnetic, video, audio, radio, and microwave data and/or signals, combinations thereof, and the like, among others. A communicative connection may be achieved, for example, and without limitation, through wired or wireless electronic, digital, or analog, communication, either directly or by way of one or more intervening devices or components. Further, communicative connection may include electrically coupling or connecting at least an output of one device, component, or circuit to at least an input of another device, component, or circuit. For example, without limitation, via a bus or other facility for intercommunication between elements of a computing device. Communicative connecting may also include indirect connections via, for example, and without limitation, wireless connection, radio communication, low power wide area network, optical communication, magnetic, capacitive, or optical coupling, and the like. In some instances, the terminology "communicatively coupled" may be used in place of communicatively connected in this disclosure.

With continued reference to FIG. 1, apparatus 100 includes a scanner 109. As described in this disclosure, a "scanner" is an apparatus configured to capture visual information in the form of images or sequences of images. In an embodiment, scanner 109 may convert an optical image into an electronic signal, which can then be processed, stored, or displayed, as described in detail below. For example, and without limitation, imaging device as described herein, in some cases, may be used specialized for use in medical diagnostics under clinical setting, e.g., a microscope configured to capture detailed, high-resolution images of microscopic subjects to enable accurate diagnosis, disease monitoring, and any other biological research. In a non-limiting example, scanner 109 may be consistent with any imaging device as described in U.S. Pat. App. Ser. No. 18/226,058 (Attorney Docket Number 1519-102USU1), filed on July 25, 2023, and entitled "IMAGING DEVICE AND A METHOD FOR IMAGE GENERATION OF A SPECIMEN," the entirety of which is incorporated herein.

With continued reference to FIG. 1, Scanner 109 includes a stage 111 configured to receive and hold slide 112. As used in this disclosure, a "stage" is a flat platform on which slide 112 or specimen is placed for examination. In some embodiments, stage 111 may be an even surface without significant bumps, depressions, or curvatures. In some cases, stage may include a slide port having one or more alignment features, wherein the "alignment features" are physical features that help to secure received slide 112 in place and/or align a slide with another component of scanner 109 as described herein. In some embodiments, alignment features may include a component which keeps slide 112 secure, such as a clamp, latch, clip, recessed area, or another fastener. In some embodiments, stage 111 may allow for easy removal or insertion of slide 112. In some embodiments, stage 111 may include a transparent surface through which light may travel. In some embodiments, slide 112 may rest on and/or may be illuminated by light traveling through such a transparent surface of stage. In some embodiments, stage 111 may be mechanically connected to an actuator mechanism as described below. In some embodiments, the stage 111 is configured to move the slide 112 relative to the optical system 110. As a non-limiting example, stage 111 may move the slide 112 closer to or farther from optical system 110. As a non-limiting example, stage 111 may move the optical system 119 closer to or farther from slide 112.

Still referring to FIG. 1, in some cases, scanner 109 may include a scanner actuator mechanism. As used herein, a "scanner actuator mechanism" is a mechanical component configured to change the position of a slide relative to an optical system 110. In a non-limiting example, actuator mechanism may be configured to precisely move stage in the X, Y, and/or even Z directions, allowing for detailed examination of different part of the specimen. In one or more embodiments, actuator mechanism may be used to alter line of sight so that an image of slide 112 may be captured, as discussed further in this disclosure. In some embodiments, actuator mechanism may be mechanically connected to slide 112, such as slide 112 in slide port. In some embodiments, actuator mechanism may be mechanically connected to slide port. For example, actuator mechanism may move slide port in order to move slide 112. For example, and without limitation, actuator mechanism may move slide port so that a distance *D* between a top surface of slide 112 and an optical component as described below varies.

With continued reference to FIG. 1, in some embodiments, actuator mechanism may also vary an angle between top surface (e.g., surface directed toward, or facing, optical system 110 and that the slide 112 and/or specimen contacts) and ground. In some embodiments, actuator mechanism may be mechanically connected to a mobile element (i.e., any movable or portable object, component, and device) within scanner 109 such as, without limitation, slide 112, slide port, stage, or an optical system 110 as described in detail below. In some embodiments, actuator mechanism may be configured to change the relative position of slide 112 and optical system 110 by moving stage, slide 112, and/or optical system 110 in X, Y, and/or Z directions during slide scanning and/or re-scanning process as described in detail below.

Still referring to FIG. 1, in some embodiments, actuator mechanism may include a hydraulic actuator. A hydraulic actuator may consist of a cylinder or fluid motor that uses hydraulic power to facilitate mechanical operation. Output of hydraulic actuator mechanism may include mechanical motion, such as without limitation linear, rotary, or oscillatory motion. In some embodiments, hydraulic actuator may employ a liquid hydraulic fluid. As liquids, in some cases, are incompressible, a hydraulic actuator can exert large forces. Additionally, as force is equal to pressure multiplied by area, hydraulic actuators may act as force transformers with changes in area (*e.g.*, cross sectional area of cylinder and/or piston). An exemplary hydraulic cylinder may consist of a hollow cylindrical tube within which a piston can slide. In some cases, a hydraulic cylinder may be considered single acting. "Single acting" may be used when fluid pressure is applied substantially to just one side of a piston. Consequently, a single acting piston can move in only one direction. In some cases, a spring may be used to give a single acting piston a return stroke. In some cases, a hydraulic cylinder may be double acting. "Double acting" may be used when pressure is applied substantially on each side of a piston; any difference in resultant force between the two sides of the piston causes the piston to move.

Still referring to FIG. 1, in some embodiments, actuator mechanism may include a pneumatic actuator mechanism. In some cases, a pneumatic actuator may enable considerable forces to be produced from relatively small changes in gas pressure. In some cases, a pneumatic actuator may respond more quickly than other types of actuators such as, for example, hydraulic actuators. A pneumatic actuator may use compressible fluid (*e.g.*, air). In some cases, a pneumatic actuator may operate on compressed air. Operation of hydraulic and/or pneumatic actuators may include control of one or more valves, circuits, fluid pumps, and/or fluid manifolds.

Still referring to FIG. 1, in some cases, actuator mechanism may include an electric actuator. Electric actuator mechanism may include any of electromechanical actuators, linear motors, and the like. In some cases, actuator mechanism may include an electromechanical actuator. An electromechanical actuator may convert a rotational force of an electric rotary motor into a linear movement to generate a linear movement through a mechanism. Exemplary mechanisms, include rotational to translational motion transformers, such as without limitation a belt, a screw, a crank, a cam, a linkage, a scotch yoke, and the like. In some cases, control of an electromechanical actuator may include control of electric motor, for instance a control signal may control one or more electric motor parameters to control electromechanical actuator. Exemplary non-limitation electric motor parameters include rotational position, input torque, velocity, current, and potential. Electric actuator mechanism may include a linear motor. Linear motors may differ from electromechanical actuators, as power from linear motors is output directly as translational motion, rather than output as rotational motion and converted to translational motion. In some cases, a linear motor may cause lower friction losses than other devices. Linear motors may be further specified into at least 3 different categories, including flat linear motor, U-channel linear motors and tubular linear motors. Linear motors may be directly controlled by a control signal for controlling one or more linear motor parameters. Exemplary linear motor parameters include without limitation position, force, velocity, potential, and current.

Still referring to FIG. 1, in some embodiments, an actuator mechanism may include a mechanical actuator mechanism. In some cases, a mechanical actuator mechanism may function to execute movement by converting one kind of motion, such as rotary motion, into another kind, such as linear motion. An exemplary mechanical actuator includes a rack and pinion. In some cases, a mechanical power source, such as a power take off may serve as power source for a mechanical actuator. Mechanical actuators may employ any number of mechanisms, including for example without limitation gears, rails, pulleys, cables, linkages, and the like.

With continued reference to FIG. 1, in some cases, apparatus 100 may include a transfer component, wherein the "transfer component," as described herein according to some embodiments, refers to a device or system configured to move, transfer, or position objects e.g., slide 112 or any slide of plurality of slides 112 within at least one slide storage component as described above, from one location to another. In some cases, transfer component may be positioned between at least one storage component and scanner 109 or any other processing unit, configured to automate the process of retrieving, positioning, and/or returning slides, ensuring that each slide of plurality of slides 112 may be moved efficiently between at least one slide storage and scanner 109.

Still referring to FIG. 1, in a non-limiting example, transfer component may include programmable robotic arm that is configured to pick up, move, and place slide 112. In some cases, transfer component may include one or more joints, wherein each joint may allow at least a section of transfer component to move in a pre-defined range in X, Y, and/or Z directions. Transfer component may include a gripping component located, in some cases, at the distal end of transfer component, wherein the gripping component may be configured to securely hold and release one or more slides. Such gripping component may be made of soft, non-abrasive materials to ensure no damage to held slides during slide transferring. In some cases, transfer component may employ a pinch or suction mechanism to pick up and release slide. In other cases, transfer component may be integrating into actuator mechanism as described above, for instance, and without limitation, having a mechanism that converts rotary motion into linear motion, wherein the linear motion may then be harnessed to move or position one or more slides on stage of scanner 109 with precision. In a non-limiting example, such mechanism may include any mechanism that converts rotary motion into linear motion as described in U.S. Pat. App. Ser. No. 18/382,386 (Attorney Docket Number 1519-109USU1), filed on October 20, 2023, and entitled "APPARATUS AND METHOD OF USE OF A MECHANISM THAT CONVERTS ROTARY MOTION INTO LINEAR MOTION," which its entirety is incorporated herein.

With continued reference to FIG. 1, transfer component may be equipped with one or more sensors as described herein such as, without limitation, proximity sensor and force sensors, configured to detect the exact position of the slides being transferred, ensuring that they are accurately placed for imaging or storage. In some cases, such information may be received from other devices within apparatus 100, for example, transfer component may be in communication with scanner 109, wherein one or more sensors integrated into scanner 109 e.g., one or more pressure sensors may be configured to detect a positioning of slide 112. Scanner 109 may signal transfer component upon a successful slide positioning (i.e., slide being correctly placed on stage within alignment features).

Still referring to FIG. 1, in some cases, transfer component and/or actuator mechanism may include one or more dampening components to minimize vibrations or shocks during slides transfer. Dampening components may be configured to ensure that slides being transferred remain undamaged and in intended position at the end of the process. One or more computing device as described in detail below may be configured to control transfer component as well as actuator mechanism as described herein to follow a pre-defined path for slide transferring between at least one slide storage and scanner 109. Additionally, or alternatively, safety features e.g., collision detection may be implemented for transferring component to stop or retract if an obstacle is detected. Other exemplary embodiments of transfer mechanism as described herein may include, without limitation, conveyor belt system, linear actuator, rotary table (i.e., a rotating platform/stage that hold multiple slides), among others.

With continued reference to FIG. 1, scanner 109 includes an optical system 110. As used in this disclosure, an "optical systemo" is an arrangement of one or more components which together act upon or employ electromagnetic radiation, such as light (e.g., visible light, infrared light, UV light, or the like). Optical system 110 may include one or more optical components, wherein each "optical component," as described herein, refers to any device or part of a device that manipulates, interacts with, or is affected by light. In a non-limiting example, optical components may include lenses, mirrors, windows, filters, and the like. In some cases, optical system 110 may form an optical image that corresponds to an optical object. For instance, and without limitation, optical system 110 may form an optical image at or upon an optical sensor 113, which can capture, *e.g.*, digitize, the optical image as described in detail below. In some cases, optical system 110 may have at least a magnification. For instance, and without limitation, optical system 110 may include an objective (*e.g.*, microscope objective) and one or more reimaging optical elements that together produce an optical magnification as described in detail below. In some cases, a degree of optical magnification may be referred to herein as zoom.

Still referring to FIG. 1, in some cases, optical system 110 a light source. As used in this disclosure, a "light source" is any device configured to emit electromagnetic radiation. In some embodiments, light source may emit a light having substantially one wavelength. In some embodiments, light source may emit light having a wavelength range. Light emitted by light source as described herein may include, without limitation, ultraviolet light, visible light, and/or infrared light. In non-limiting examples, light source may include a light-emitting diode (LED), an organic LED (OLED) and/or any other light emitter. Such light source may be configured to illuminate slide 112 and/or specimen on slide port and/or stage. In a non-limiting example, light source may illuminate slide 112 and/or specimen on slide port and/or stage from below as illustrated in FIG. 1. In another non-limiting example, light source may illuminate slide 112 and/or specimen from above.

With continued reference to FIG. 1, in some cases, light source may be connected to one or more optical components as described herein such as, without limitation, a condenser lens (i.e., an optical component used to focus and condense light emitted by light source onto slide 112 and/or specimen). In some cases, condenser lens may be configured to focus and uniformly distribute light so that slide 112 and/or specimen is evenly illuminated, thereby enhancing the resolution and contrast of the image. In a non-limiting example, optical component such as condenser lens may gather and focus light emitted from light source into a cone of light that illuminate slide 112 and/or specimen with uniform intensity over the entire viewable area. In some cases, condenser lens may include an aperture diaphragm, e.g., a variable opening that may be adjusted to control the amount of light reaching slide 112 and/or specimen. In some cases, adjusting such diaphragm may influence the contrast and depth of field in the image.

With continued reference to FIG. 1, in some cases, optical component may also include an objective lens. As used in this disclosure, an "objective lens" is an optical component that gathers light from slide 112 and/or specimen and focuses it to produce optical image inside scanner 109. In some embodiments, produced optical image may be magnified by eyepiece lens for viewing by a human operator or captured by optical sensor 113 as described in detail below for slide scanning and/or digital imaging. In some embodiments, optical system 110 may include three objective lenses, wherein each objective lens may include various magnifications, ranging from 4x to 100x or even beyond. In some cases, magnification may be inscribed on the optical component casing. In some embodiments, optical components may include different numerical apertures (NA) that measure lens's ability to gather light and resolve slide 112 and/or specimen detail at a fixed object distance. For example, and without limitation, a higher NA may indicate better resolving power. Exemplary types of objective lens may include, without limitation, dry objectives, immersion objectives, water immersion objectives, and/or the like.

Still referring to FIG. 1, in some embodiments, one or more optical components within optical system 110 may be mounted on a nosepiece of scanner 109. As used in this disclosure, a "nosepiece" is a part of scanner 109, as shown in FIG. 1, that holds multiple optical components e.g., a plurality of objective lenses. In some cases, nosepiece may include a revolving nosepiece (also known as a turret), wherein the revolving nosepiece may include a rotatable component located head portion of scanner 109 and configured to hold multiple objective lenses. Optical components may be quickly and efficiently switched from one another using the revolving nosepiece during imaging of plurality of slides 112. In some embodiments, optical system 110 may be parfocal; for instance, and without limitation, when a first objective lens is in focus, switching to a second objective lens or a third objective lens may require minimal refocusing. In some cases, plurality of optical components may be spaced out at a consistent distance on the revolving nosepiece and each optical component may be at a consistent distance from stage.

It should be noted that the number of optical components within optical system 110 as described above is illustrative and should not be restrictive. The actual number of optical components may vary, and optical system 110 may incorporate greater or fewer optical components as needed. As an ordinary person skilled in the art, upon reviewing the entirety of this disclosure, will be aware of various modifications, adaptations, and alternative configurations that can be applied to optical system 110 and optical components as described herein.

With continued reference to FIG. 1, as used herein, an "optical sensor 113" is a device that measures light and converts the measured light into one or more signals; one or more signals may include, without limitation, one or more electrical signals. Scanner 109 includes optical sensor 113. In some embodiments, optical sensor 113 may include at least a photodetector. As used herein, a "photodetector" is a device that is sensitive to light and thereby able to detect light. In some embodiments, a photodetector may include a photodiode, a photoresistor, a photosensor, a photovoltaic chip, and the like. In some embodiments, optical sensor 113 may include a plurality of photodetectors. Optical sensor 113 may include, without limitation, a camera. Optical sensor 113 may be in electronic communication with a computing device as described in detail throughout this disclosure. As used herein, "electronic communication" as used in this disclosure is a shared data connection between two or more devices. In some embodiments, optical system 110 may include two or more optical sensors 113. In some cases, optical sensor 113 may be disposed adjacent to optical components. In a non-limiting example, optical sensor 113 may be mounted on nosepiece as described above. In another non-limiting example, optical sensor 113 may be installed inside the head portion of scanner 109, above optical components.

Still referring to FIG. 1, in some embodiments, at least one optical sensor 113 may include a camera. In some cases, a camera may include one or more optics as described herein such as, without limitation, spherical lenses, aspherical lenses, reflectors, polarizers, filters, windows, aperture stops, and the like. In some embodiments, one or more optics associated with a camera may be adjusted in order to, in non-limiting examples, change the zoom, depth of field, and/or focus distance of the camera. In some embodiments, one or more of such settings may be configured to detect a feature of specimen on slide 112. In some embodiments, one or more of such settings may be configured based on a parameter set (i.e., a set of values, such as without limitation, quantitative and/or numerical values that identify how image is to be captured), such as any parameter set as disclosed in U.S. Pat. App. Ser. No. 18/226,058. In some embodiments, camera may capture images at a low depth of field. In some embodiments, scanner 109 may be consistent with any imaging device disclosed in U.S. Non-provisional App. No. 18/660,687 (Attorney Docket No. 1519-111USC1), filed on May 10, 2024, and entitled "A SYSTEM AND METHOD FOR HOT-SWAPPING OF SCANNER ENTITIES INTO A CLUSTER," the entirety of which is incorporated herein.

With continued reference to FIG. 1, scanner 109 is configured to capture an image 114 of slide 112. For the purposes of this disclosure, an "image" is a visual representation of a subject. Scanner 109 is configured to capture a Macro Image 116 of a slide 112. A "macro image," for the purposes of this disclosure, is an image that has been captured from a close-up perspective, featuring subjects at a magnification of less than 5x. Macro Image 116 may be captured using a macro lens. A "macro lens," for the purposes of this disclosure, is a lens that is configured to capture subjects from a close-up perspective, featuring subjects at a magnification of less than 5x. In some embodiments, macro image may feature subjects at a 1:1 magnification ratio. In some embodiments, macro lens may be configured to capture subjects at a 1:1 magnification ratio.

With continued reference to FIG. 1, scanner 109 may be configured to capture a high-magnification image 118 of slide 112. A "high-magnification image," for the purposes of this disclosure, is an image with a magnification of greater than 5x. High-magnification image 118 may be captured using a high-magnification lens. For the purposes of this disclosure, a "high-magnification lens" is a lens that is configured to capture subjects at a magnification of greater than 5x. In some embodiments, high-magnification image may include an image with a magnification of greater than 10x. In some embodiments, high-magnification image may include an image with a magnification of greater than 15x. In some embodiments, high-magnification image may include an image with a magnification of 20x or more.

With continued reference to FIG. 1, slide 112 may include a glass slide. In some embodiments, slide 112 may include a label 120. A "label," for the purposes of this disclosure is a portion of a slide that contains metadata of the slide. In some embodiments, label 120 may be adhered to slide 112 using adhesive. In some embodiments, label 120 may be printed onto slide 112.

With continued reference to FIG. 1, in some embodiments, label 120 may include a Unique Identifier 122. A "unique identifier," for the purposes of this disclosure is data that uniquely identifies an object. For example, Unique Identifier 122 may identify a slide 112 (e.g., using a slide number) among a plurality of slides 112. For example, Unique Identifier 122 may identify particular patient (e.g., a patient number, identification number, or the like.) Unique Identifier 122 may identify a clinician responsible for the patient or slide. Unique Identifier 122 may include a numeric code. Unique Identifier 122 may include an alpha-numeric code. In some embodiments, Unique Identifier 122 may include a visual unique identifier. A "visual unique identifier," is a unique identifier that uses the special orientation of visual information to encode a unique identifier. For example, visual unique identifier may include a barcode. Barcodes may include, as non-limiting examples, code 69, UPC, code 128, and the like. In some embodiments, visual unique identifier may include a matrix code. Matrix code may include, as non-limiting examples, a QR code, data matrix, PDF417, Codabar, and Aztec, and the like.

With continued reference to FIG. 1, slide 112 may include a pathology sample 124. For the purposes of this disclosure, "pathology sample" is a portion of tissue, fluid, cells, or other biological material that has been collected from a patient. In some embodiments, slides 112 may include various slices of one tissue, cell, or biological material. For example, a plurality of slides 112 may include different slices of a tumor.

With continued reference to FIG. 1, memory 108 contains instructions further configuring the at least a processor 104 to receive Macro Image 116 of slide 112 from scanner 109. In some embodiments, processor 104 may receive Macro Image 116 of slide 112 using wired communication. In some embodiments, processor 104 may receive Macro Image 116 of slide 112 using wireless communication. Wireless communication may include WiFi, Bluetooth, cellular communication, 3G, 4G, LTE, 5G, and the like. In some embodiments, Macro Image 116 of slide 112 may be stored in a slide database. Slide database may be communicatively connected to scanner 109 and/or processor 104. In some embodiments, processor 104 may be configured to retrieve Macro Image 116 from slide database. Slide database may be implemented, without limitation, as a relational database, a key-value retrieval database such as a NOSQL database, or any other format or structure for use as a database that a person skilled in the art would recognize as suitable upon review of the entirety of this disclosure. Slide database may alternatively or additionally be implemented using a distributed data storage protocol and/or data structure, such as a distributed hash table or the like. Slide database may include a plurality of data entries and/or records as described above. Data entries in a database may be flagged with or linked to one or more additional elements of information, which may be reflected in data entry cells and/or in linked tables such as tables related by one or more indices in a relational database. Persons skilled in the art, upon reviewing the entirety of this disclosure, will be aware of various ways in which data entries in a database may store, retrieve, organize, and/or reflect data and/or records as used herein, as well as categories and/or populations of data consistently with this disclosure.

With continued reference to FIG. 1, memory 108 contains instructions further configuring processor 104 to extract metadata 126 from Macro Image 116 of slide 112. "Metadata," for the purposes of this disclosure, is data that describes other data. In some embodiments, metadata 126 may describe slide 112 and/or image 114. In some embodiments, metadata 126 may describe Pathology Sample 124. In some embodiments, metadata 126 may include a content of slide 112 and/or image 114. In some embodiments, metadata 126 may include information regarding a patient from which pathology sample was harvested. In some embodiments, metadata 126 may include a slide preparation procedure.

With continued reference to FIG. 1, extracting metadata 126 from Macro Image 116 of slide 112 may include determining a circularity 128 of Pathology Sample 124. In some embodiments, metadata 126 may include circularity 128. A "circularity," for the purposes of this disclosure is a datum that represents the roundness of an object. In some embodiments, circularity may be calculated by comparing the object area (e.g., the area of Pathology Sample 124) to the area of a circle having the same perimeter of the object. In some embodiments, circularity may be calculated using:

$$Circularity = \frac{4\pi * (Sample\ Area)}{(Sample\ Perimeter)^2}$$

With continued reference to FIG. 1, determining a circularity 128 of Pathology Sample 124 may include using an image processing algorithm 130. In some embodiments, image processing algorithm 130 may include a plurality of image processing algorithms 130. In some embodiments, apparatus 100 may include an image processing module, wherein image processing module is configured to run one or more image processing algorithms 130. As used in this disclosure, an "image processing module" is a component or components configured to process digital images. Component may include software components or hardware components. In an embodiment, image processing module may include a plurality of software algorithms that can analyze, manipulate, or otherwise enhance image 114, such as, without limitation, a plurality of image processing techniques as described below. In another embodiment, image processing module may include hardware components such as, without limitation, one or more graphics processing units (GPUs) that can accelerate the processing of large number of images. In some cases, image processing module may be implemented with one or more image processing libraries such as, without limitation, OpenCV, PIL/Pillow, ImageMagick, and the like. Image processing module may include, be included in, or be communicatively connected to scanner 109, processor 104, and/or memory 108. Image processing module may include, but is not limited to, image enhancement and restoration, segmentation of features based on an area of interest, registration and fusion of multimodality images, classification of image features through structure characterization, quantitative measurement of image features, any combination thereof, and the like. Image processing module may include any image processing technique used across various fields including, but not limited to, healthcare, remote sensing, surveillance, entertainment, robotics, and the like.

With continued reference to FIG. 1, image processing module may be configured to receive images from processor 104 and/or any other input methods as described herein. In a non-limiting example, image processing module may be configured to receive images from processor 104, scanner 109, and/or an image database.

With continued reference to FIG. 1, image processing module and/or image processing algorithm 130 may be configured to process images. In an embodiment, image processing module and/or image processing algorithm 130 may be configured to compress and/or encode images to reduce the file size and storage requirements while maintaining the essential visual information needed for further processing steps as described below. In an embodiment, compression and/or encoding of plurality of images may facilitate faster transmission of images. In some cases, image processing module and/or image processing algorithm 130 may be configured to perform a lossless compression on images, wherein the lossless compression may maintain the original image quality of images. In a nonlimiting example, image processing module and/or image processing algorithm 130 may utilize one or more lossless compression algorithms, such as, without limitation, Huffman coding, Lempel-Ziv-Welch (LZW), Run-Length Encoding (RLE), and/or the like to identify and remove redundancy in each image in a plurality of images without losing any information. In such embodiment, compressing and/or encoding each image of a plurality of images may include converting the file format of each image into PNG, GIF, lossless JPEG2000 or the like. In an embodiment, images compressed via lossless compression may be perfectly reconstructed to the original form (e.g., original image resolution, dimension, color representation, format, and the like) of images. In other cases, image processing module and/or image processing algorithm 130 may be configured to perform a lossy compression on plurality of images, wherein the lossy compression may sacrifice some image quality of images to achieve higher compression ratios. In a non-limiting example, image processing module and/or image processing algorithm 130 may utilize one or more lossy compression algorithms, such as, without limitation, Discrete Cosine Transform (DCT) in JPEG or Wavelet Transform in JPEG2000, discard some less significant information within images, resulting in a smaller file size but a slight loss of image quality of images. In such embodiment, compressing and/or encoding each image of a plurality of images may include converting the file format of each image into JPEG, WebP, lossy JPEG2000, or the like.

With continued reference to FIG. 1, in an embodiment, processing images may include determining a degree of quality of depiction of a region of interest of an image or a plurality of images. In some embodiments, degree of quality of depiction of a region of interest may form part of metadata 126. In an embodiment, image processing module and/or image processing algorithm 130 may determine a degree of blurriness of images. In a non-limiting example, image processing module and/or image processing algorithm 130 may perform a blur detection by taking a Fourier transform, or an approximation such as a Fast Fourier Transform (FFT) of images and analyzing a distribution of low and high frequencies in the resulting frequency-domain depiction of images; for instance, and without limitation, numbers of high-frequency values below a threshold level may indicate blurriness. In another non-limiting example, detection of blurriness may be performed by convolving images, a channel of images, or the like with a Laplacian kernel; for instance, and without limitation, this may generate a numerical score reflecting a number of rapid changes in intensity shown in each image, such that a high score indicates clarity, and a low score indicates blurriness. In some cases, blurriness detection may be performed using a Gradient-based operator, which measures operators based on the gradient or first derivative of images, based on the hypothesis that rapid changes indicate sharp edges in the image, and thus are indicative of a lower degree of blurriness. In some cases, blur detection may be performed using Wavelet-based operator, which takes advantage of the capability of coefficients of the discrete wavelet transform to describe the frequency and spatial content of images. In some cases, blur detection may be performed using statistics-based operators take advantage of several image statistics as texture descriptors in order to compute a focus level. In other cases, blur detection may be performed by using discrete cosine transform (DCT) coefficients in order to compute a focus level of images from its frequency content. Additionally, or alternatively, image processing module and/or image processing algorithm 130 may be configured to rank images according to degree of quality of depiction of a region of interest and select a highest-ranking image from a plurality of images.

With continued reference to FIG. 1, processing images may include enhancing at least a region of interest via a plurality of image processing techniques to improve the quality (or degree of quality of depiction) of an image for better processing and analysis as described further in this disclosure. In an embodiment, image processing module and/or image processing algorithm 130 may be configured to perform a noise reduction operation on an image, wherein the noise reduction operation may remove or minimize noise (arises from various sources, such as sensor limitations, poor lighting conditions, image compression, and/or the like), resulting in a cleaner and more visually coherent image. In some cases, noise reduction operation may be performed using one or more image filters; for instance, and without limitation, noise reduction operation may include Gaussian filtering, median filtering, bilateral filtering, and/or the like. Noise reduction operation may be done by image processing module and/or image processing algorithm 130, by averaging or filtering out pixel values in neighborhood of each pixel of an image to reduce random variations.

With continued reference to FIG. 1, in another embodiment, image processing module and/or image processing algorithm 130 may be configured to perform a contrast enhancement operation on an image. In some cases, an image may exhibit low contrast, which may, for example, make a feature difficult to distinguish from the background. Contrast enhancement operation may improve the contrast of an image by stretching the intensity range of the image and/or redistributing the intensity values (i.e., degree of brightness or darkness of a pixel in the image). In a non-limiting example, intensity value may represent the gray level or color of each pixel, scale from 0 to 255 in intensity range for an 8-bit image, and scale from 0 to 16,777,215 in a 24-bit color image. In some cases, contrast enhancement operation may include, without limitation, histogram equalization, adaptive histogram equalization (CLAHE), contrast stretching, and/or the like. image processing module and/or image processing algorithm 130 may be configured to adjust the brightness and darkness levels within an image to make a feature more distinguishable (i.e., increase degree of quality of depiction). Additionally, or alternatively, image processing module and/or image processing algorithm 130 may be configured to perform a brightness normalization operation to correct variations in lighting conditions (i.e., uneven brightness levels). In some cases, an image may include a consistent brightness level across a region after brightness normalization operation performed by image processing module and/or image processing algorithm 130. In a non-limiting example, image processing module and/or image processing algorithm 130 may perform a global or local mean normalization, where the average intensity value of an entire image or region of an image may be calculated and used to adjust the brightness levels.

With continued reference to FIG. 1, in other embodiments, image processing module and/or image processing algorithm 130 may be configured to perform a color space conversion operation to increase degree of quality of depiction. In a non-limiting example, in case of a color image (i.e., RGB image), image processing module and/or image processing algorithm 130 may be configured to convert RGB image to grayscale or HSV color space. Such conversion may emphasize the differences in intensity values between a region or feature of interest and the background. Image processing module and/or image processing algorithm 130 may further be configured to perform an image sharpening operation such as, without limitation, unsharp masking, Laplacian sharpening, high-pass filtering, and/or the like. Image processing module and/or image processing algorithm 130 may use image sharpening operation to enhance the edges and fine details related to a region or feature of interest within an image by emphasizing high-frequency components within an image.

With continued reference to FIG. 1, in an embodiment, isolating a region or feature of interest from an image may include utilizing an edge detection technique, which may detect one or more shapes defined by edges. An "edge detection technique," as used in this disclosure, includes a mathematical method that identifies points in a digital image, at which the image brightness changes sharply and/or has a discontinuity. In an embodiment, such points may be organized into straight and/or curved line segments, which may be referred to as "edges." Edge detection technique may be performed by image processing module and/or image processing algorithm 130, using any suitable edge detection algorithm, including without limitation Canny edge detection, Sobel operator edge detection, Prewitt operator edge detection, Laplacian operator edge detection, and/or Differential edge detection. Edge detection technique may include phase congruency-based edge detection, which finds all locations of an image where all sinusoids in the frequency domain, for instance as generated using a Fourier decomposition, may have matching phases which may indicate a location of an edge. Edge detection technique may be used to detect a shape of a feature of interest such as a cell, indicating a cell membrane or wall; in an embodiment, edge detection technique may be used to find closed figures formed by edges.

Referring to FIG. 1, in a non-limiting example, identifying one or more features from image 114 may include isolating one or more areas of interests using one or more edge detection techniques. An area of interest may include a specific area within a digital image that contains information relevant to further processing, such as one or more image features. In a non-limiting example, image data located outside an area of interest may include irrelevant or extraneous information. Such portion of image 114 containing irrelevant or extraneous information may be disregarded by image processing module and/or image processing algorithm 130, thereby allowing resources to be concentrated at a targeted area of interest. In some cases, the area of interest may vary in size, shape, and/or location within image 114. In a non-limiting example the area of interest may be presented as a circle around the nucleus of a cell. In some cases, the area of interest may specify one or more coordinates, distances, and the like, such as center and radius of a circle around the nucleus of a cell in an image. Image processing module and/or image processing algorithm 130 may then be configured to isolate the area of interest from image 114 based on the particular feature. In a non-limiting example, image processing module and/or image processing algorithm 130 may crop an image according to a bounding box around an area of interest.

With continued reference to FIG. 1, image processing module and/or image processing algorithm 130 may be configured to perform a connected component analysis (CCA) on an image for feature of interest isolation. As used in this disclosure, a "connected component analysis (CCA)," also known as connected component labeling, is an image processing technique used to identify and label connected regions within a binary image (i.e., an image which each pixel having only two possible values: 0 or 1, black or white, or foreground and background). "Connected regions," as described herein, is a group of adjacent pixels that share the same value and are connected based on a predefined neighborhood system such as, without limitation, 4-connected or 8-connected neighborhoods. In some cases, image processing module and/or image processing algorithm 130 may convert an image into a binary image via a thresholding process, wherein the thresholding process may involve setting a threshold value that separates the pixels of an image corresponding to feature of interest (foreground) from those corresponding to the background. Pixels with intensity values above the threshold may be set to 1 (white) and those below the threshold may be set to 0 (black). In an embodiment, CCA may be employed to detect and extract feature of interest by identifying a plurality of connected regions that exhibit specific properties or characteristics of the feature of interest. image processing module and/or image processing algorithm 130 may then filter plurality of connected regions by analyzing plurality of connected regions properties such as, without limitation, area, aspect ratio, height, width, perimeter, and/or the like. In a non-limiting example, connected components that closely resemble the dimensions and aspect ratio of feature of interest may be retained, by image processing module and/or image processing algorithm 130 as feature of interest, while other components may be discarded. Image processing module and/or image processing algorithm 130 may be further configured to extract feature of interest from an image for further processing. Image processing algorithm 130 may be consistent with any image processing algorithm 130 disclosed in U.S. Non-provisional Application No. 18/647,138 (Attorney Docket No. 1519-145USU1), filed on April 26, 2024, and entitled "APPARATUS FOR CONTROL OF IMAGE PROCESSING ALGORITHMS IN A GRAPHICAL INTERFACE," the entirety of which is incorporated herein.

With continued reference to FIG. 1, any image processing technique described above may be used to determine circularity 128 of Pathology Sample 124. In some embodiments, edge detection and/or CCA may be used to detect the location and/or shape of Pathology Sample 124. The location and/or shape of Pathology Sample 124 may be used by processor 104 to determine circularity 128 of Pathology Sample 124. In some embodiments, processor 104 may use location and/or shape of Pathology Sample 124 to determine a pathology sample area, pathology sample diameter, pathology sample radius, and the like in order to determine circularity 128.

With continued reference to FIG. 1, memory 108 may contain instructions further configuring processor 104 to extract textual data 132 from label 120 of slide 112 using optical character recognition 134. In some embodiments, processor 104 may be configured to extract textual data 132 from a non-label area of slide 112. In some embodiments, extracting textual data 132 from a non-label area of slide 112 may include using handwriting recognition, as described below, to recognize handwriting on slide 112 and covert it to textual data 132.

Still referring to FIG. 1, in some embodiments, optical character recognition or optical character reader (OCR) includes automatic conversion of images of written (e.g., typed, handwritten or printed text) into machine-encoded text. In some cases, recognition of at least a keyword from an image component may include one or more processes, including without limitation optical character recognition (OCR), optical word recognition, intelligent character recognition, intelligent word recognition, and the like. In some cases, OCR may recognize written text, one glyph or character at a time. In some cases, optical word recognition may recognize written text, one word at a time, for example, for languages that use a space as a word divider. In some cases, intelligent character recognition (ICR) may recognize written text one glyph or character at a time, for instance by employing machine learning processes. In some cases, intelligent word recognition (IWR) may recognize written text, one word at a time, for instance by employing machine learning processes.

Still referring to FIG. 1, in some cases OCR may be an "offline" process, which analyses a static document or image frame. In some cases, handwriting movement analysis can be used as input to handwriting recognition. For example, instead of merely using shapes of glyphs and words, this technique may capture motions, such as the order in which segments are drawn, the direction, and the pattern of putting the pen down and lifting it. This additional information can make handwriting recognition more accurate. In some cases, this technology may be referred to as "online" character recognition, dynamic character recognition, real-time character recognition, and intelligent character recognition.

Still referring to FIG. 1, in some cases, OCR processes may employ pre-processing of image component. Pre-processing process may include without limitation de-skew, de-speckle, binarization, line removal, layout analysis or "zoning," line and word detection, script recognition, character isolation or "segmentation," and normalization. In some cases, a de-skew process may include applying a transform (e.g., homography or affine transform) to image component to align text. In some cases, a de-speckle process may include removing positive and negative spots and/or smoothing edges. In some cases, a binarization process may include converting an image from color or greyscale to black-and-white (i.e., a binary image). Binarization may be performed as a simple way of separating text (or any other desired image component) from a background of image component. In some cases, binarization may be required for example if an employed OCR algorithm only works on binary images. In some cases. a line removal process may include removal of non-glyph or non-character imagery (e.g., boxes and lines). In some cases, a layout analysis or "zoning" process may identify columns, paragraphs, captions, and the like as distinct blocks. In some cases, a line and word detection process may establish a baseline for word and character shapes and separate words, if necessary. In some cases, a script recognition process may, for example in multilingual documents, identify script allowing an appropriate OCR algorithm to be selected. In some cases, a character isolation or "segmentation" process may separate signal characters, for example character-based OCR algorithms. In some cases, a normalization process may normalize aspect ratio and/or scale of image component.

Still referring to FIG. 1, in some embodiments an OCR process will include an OCR algorithm. Exemplary OCR algorithms include matrix matching process and/or feature extraction processes. Matrix matching may involve comparing an image to a stored glyph on a pixel-by-pixel basis. In some case, matrix matching may also be known as "pattern matching," "pattern recognition," and/or "image correlation." Matrix matching may rely on an input glyph being correctly isolated from the rest of the image component. Matrix matching may also rely on a stored glyph being in a similar font and at a same scale as input glyph. Matrix matching may work best with typewritten text.

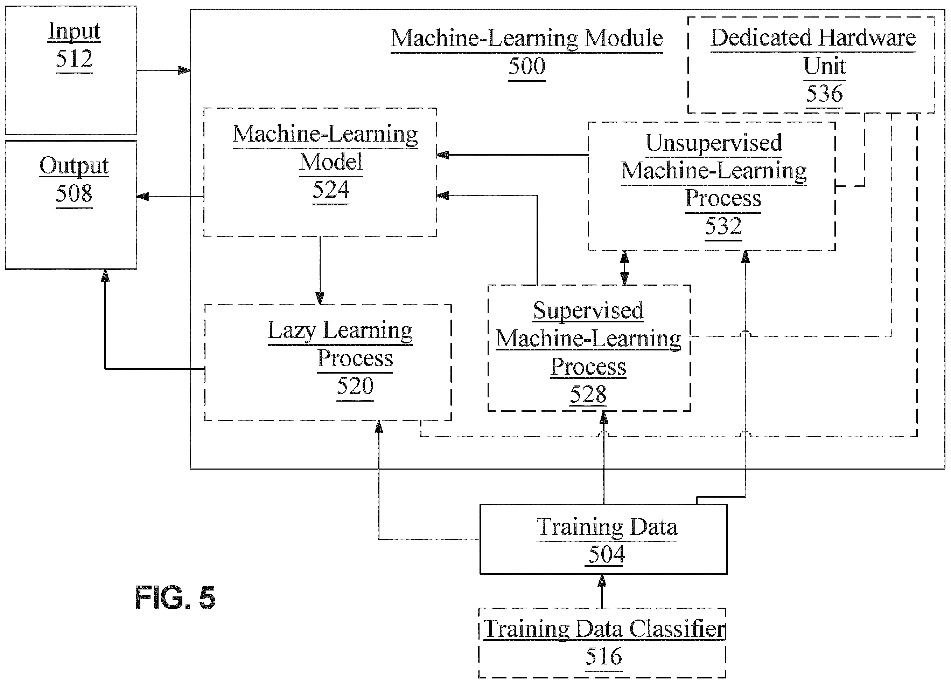

Still referring to FIG. 1, in some embodiments, an OCR process may include a feature extraction process. In some cases, feature extraction may decompose a glyph into features. Exemplary non-limiting features may include corners, edges, lines, closed loops, line direction, line intersections, and the like. In some cases, feature extraction may reduce dimensionality of representation and may make the recognition process computationally more efficient. In some cases, extracted feature can be compared with an abstract vector-like representation of a character, which might reduce to one or more glyph prototypes. General techniques of feature detection in computer vision are applicable to this type of OCR. In some embodiments, machine-learning process like nearest neighbor classifiers (e.g., k-nearest neighbors algorithm) can be used to compare image features with stored glyph features and choose a nearest match. OCR may employ any machine-learning process described in this disclosure, for example machine-learning processes described with reference to FIGS. 5-7. Exemplary non-limiting OCR software includes Cuneiform and Tesseract. Cuneiform is a multi-language, open-source optical character recognition system originally developed by Cognitive Technologies of Moscow, Russia. Tesseract is free OCR software originally developed by Hewlett-Packard of Palo Alto, California, United States.

Still referring to FIG. 1, in some cases, OCR may employ a two-pass approach to character recognition. Second pass may include adaptive recognition and use letter shapes recognized with high confidence on a first pass to recognize better remaining letters on the second pass. In some cases, two-pass approach may be advantageous for unusual fonts or low-quality image components where visual verbal content may be distorted. Another exemplary OCR software tool include OCRopus. OCRopus development is led by German Research Centre for Artificial Intelligence in Kaiserslautern, Germany. In some cases, OCR software may employ neural networks, for example neural networks as taught in reference to FIGS. 5 - 7.

Still referring to FIG. 1, in some cases, OCR may include post-processing. For example, OCR accuracy can be increased, in some cases, if output is constrained by a lexicon. A lexicon may include a list or set of words that are allowed to occur in a document. In some cases, a lexicon may include, for instance, all the words in the English language, or a more technical lexicon for a specific field. In some cases, an output stream may be a plain text stream or file of characters. In some cases, an OCR process may preserve an original layout of visual verbal content. In some cases, near-neighbor analysis can make use of co-occurrence frequencies to correct errors, by noting that certain words are often seen together. For example, "Washington, D.C." is generally far more common in English than "Washington DOC." In some cases, an OCR process may make us of *a priori* knowledge of grammar for a language being recognized. For example, grammar rules may be used to help determine if a word is likely to be a verb or a noun. Distance conceptualization may be employed for recognition and classification. For example, a Levenshtein distance algorithm may be used in OCR post-processing to further optimize results.

With continued reference to FIG. 1, in some embodiments, memory 108 may contain instructions configuring the at least a processor 104 to extract metadata 126 from slide and/or image using Unique Identifier 122. As a non-limiting example, processor 104 may extract unique identifier from textual data 132 (as a non-limiting example, when the Unique Identifier 122 is a numerical code). Processor 104 may then look up unique identifier in a look up table (LUT) or database to retrieve data associated with the Unique Identifier 122 which may be stored as metadata 126 of slide 112. In some embodiments, processor 104 and/or scanner 109 may scan Unique Identifier 122. Scanning Unique Identifier 122 may include one or more image processing algorithms as discussed above. For example, image processing algorithms may allow processor 104 to determine a code from a Unique Identifier 122 such as a barcode, QR code, or the like. Code may include an alphanumerical code or numerical code which may be used by processor 104 to retrieve information related to slide 112 from a database or lookup table. In some embodiments, code may include a URL, IP address, or other means of locating content on the web. Processor 104 may be configured to scrape the URL and/or IP address for information related to slide 112. This information related to slide 112 may be stored as metadata 126 for slide 112.

With continued reference to FIG. 1, in some embodiments, memory 108 may contain instructions further configuring processor 104 to identify using pattern recognition, one or more fiducials 136 on macro image 116. In some embodiments, memory 108 may contain instructions further configuring processor 104 to identify using pattern recognition, one or more printed fiducials 136 on slide 112. In some embodiments, memory 108 may contain instructions further configuring processor 104 to identify using pattern recognition, one or more hand-drawn fiducials 136 on slide 112. In some embodiments, memory 108 may contain instructions further configuring processor 104 to identify using pattern recognition, one or more hand-drawn fiducials 136 on a non-label area of slide 112. For the purposes of this disclosure, a "fiducial" is a fixed reference point on a slide. In some embodiments, fiducial may be signified by a marker such as a dot, x, star, circle, rectangle, arrow, wedge, and the like. A "printed fiducial," for the purposes of this disclosure is a fiducial that has been printed or otherwise placed on a slide using electronic printing mechanism. A "hand-drawn fiducial," for the purposes of this disclosure, is a fiducial that has been printed or otherwise placed on a slide manually by the hand of a human. In some embodiments, fiducials may be on a label 120 of slide 112. For example, fiducials may include check or x's indicating options on labels. In some embodiments, fiducials may be located in a non-label portion of slide 112. For example, this may include markings around a Pathology Sample 124.

With continued reference to FIG. 1, using pattern recognition to identify fiducials 136 may include one or more image processing algorithms 130 as described above. In some embodiments, fiducials 136 may be identifier using a fiducial machine-learning model. Fiducial machine-learning model may be trained with fiducial training data, wherein fiducial training data may include images labeled to identify fiducials. Fiducial machine-learning model may be trained with fiducial training data, wherein fiducial training data may include images labeled to identify fiducials including a type of fiducial. Fiducial machine-learning model may be trained with fiducial training data, wherein fiducial training data may include macro images labeled to identify fiducials. Fiducial machine-learning model may be trained with fiducial training data, wherein fiducial training data may include macro images labeled to identify fiducials including a type of fiducial. Fiducial machine-learning model may be configured to take image 114 or Macro Image 116 as input an output identified fiducials 136 which may, in some embodiments, include a fiducial type. Fiducial machine-learning model may be consistent with any machine-learning model in this disclosure. Fiducial machine-learning model may be created using machine-learning module 500, disclosed with reference to FIG. 5.

With continued reference to FIG. 1, memory 108 may contain instructions further configuring processor 104 to determine a classification category 138 of slide 112 as a function of metadata 126. A "classification category," for the purposes of this disclosure, is an associative group of slides.

With continued reference to FIG. 1, in some embodiments, determining a classification category 138 of slide 112 as a function of metadata 126 may include identifying one or more fiducial 136 markings on slide 112 using image processing algorithm 130. This may include any method for identifying fiducials described above.

With continued reference to FIG. 1, in some embodiments, determining a classification category 138 of slide 112 as a function of metadata 126 may include determining classification category 138 of slide 112 as a function of one or more fiducials 136. As a non-limiting example, detection of a fiducial 136 may be used as a decision factor to determine a classification category 138. In some embodiments detection of a type of fiducial 136 may be used as a decision factor to determine a classification category 138. For example, in some cases, processor 104 may retrieve a plurality of classification rules. Classification rules may instruct processor 104 to select a certain classification category 138 of a type of fiducial 136 is detected. In some embodiments, classification category 138 may be determined based on fiducial 136 using a category classifier 140 as discussed below. In some embodiments, category classifier 140 may be trained using training data correlating fiducials to classification categories.

With continued reference to FIG. 1, in some embodiments, determining a classification category 138 of slide 112 as a function of metadata 126 may include determining classification category 138 as a function of circularity 128 of Pathology Sample 124. In some embodiments, processor 104 may be configured to assign a classification category 138 depending on circularity 128. In some embodiments, processor 104 may be configured to look up circularity 128 in a look up table to retrieve classification category 138. Lookup table may include circularity values mapped to classification categories 138. In some embodiments, processor 104 may determine classification category 138 based on circularity 128 depending on one or more classification rules, wherein the classification rules may say, for example, that slides 112 with circularity 128 between 0.95 and 1.05 get assigned to category A, slides 112 with circularity 128 between 0.8 and 0.95 and between 1.05 and 1.2 get assigned to category B, and remaining slides 112 get assigned to category C. In some embodiments, the category thresholds may be user configurable. In some embodiments, classification category 138 may be determined based on circularity 128 using a category classifier 140 as discussed below. In some embodiments, category classifier 140 may be configured to determine a classification category as a function of circularity 128. In some embodiments, training data for category classifier 140 may include example circularities for slides correlated to classification categories for the slides.

With continued reference to FIG. 1, determining a classification category 138 of slide 112 as a function of metadata 126 may include determining the classification category 138 of slide 112 as a function of textual data 132. In some embodiments, this may include extracting one or more keywords 144 from textual data 132 using a natural language processing 142 algorithm. In some embodiments, a language processing module may be used to run natural language processing algorithm. Language processing module may include any hardware and/or software module. Language processing module may be configured to extract, from the one or more documents, one or more words. One or more words may include, without limitation, strings of one or more characters, including without limitation any sequence or sequences of letters, numbers, punctuation, diacritic marks, engineering symbols, geometric dimensioning and tolerancing (GD&T) symbols, chemical symbols and formulas, spaces, whitespace, and other symbols, including any symbols usable as textual data as described above. Textual data may be parsed into tokens, which may include a simple word (sequence of letters separated by whitespace) or more generally a sequence of characters as described previously. The term "token," as used herein, refers to any smaller, individual groupings of text from a larger source of text; tokens may be broken up by word, pair of words, sentence, or other delimitation. These tokens may in turn be parsed in various ways. Textual data may be parsed into words or sequences of words, which may be considered words as well. Textual data may be parsed into "n-grams", where all sequences of n consecutive characters are considered. Any or all possible sequences of tokens or words may be stored as "chains", for example for use as a Markov chain or Hidden Markov Model.

Still referring to FIG. 1, language processing module may operate to produce a language processing model. In some embodiments, natural language processing 142 algorithm may include language processing model. Language processing model may include a program automatically generated by computing device and/or language processing module to produce associations between one or more words extracted from at least a document and detect associations, including without limitation mathematical associations, between such words. Associations between language elements, where language elements include for purposes herein extracted words, relationships of such categories to other such term may include, without limitation, mathematical associations, including without limitation statistical correlations between any language element and any other language element and/or language elements. Statistical correlations and/or mathematical associations may include probabilistic formulas or relationships indicating, for instance, a likelihood that a given extracted word indicates a given category of semantic meaning. As a further example, statistical correlations and/or mathematical associations may include probabilistic formulas or relationships indicating a positive and/or negative association between at least an extracted word and/or a given semantic meaning; positive or negative indication may include an indication that a given document is or is not indicating a category semantic meaning. Whether a phrase, sentence, word, or other textual element in a document or corpus of documents constitutes a positive or negative indicator may be determined, in an embodiment, by mathematical associations between detected words, comparisons to phrases and/or words indicating positive and/or negative indicators that are stored in memory at computing device, or the like.

Still referring to FIG. 1, language processing module and/or diagnostic engine may generate the language processing model by any suitable method, including without limitation a natural language processing classification algorithm; language processing model may include a natural language process classification model that enumerates and/or derives statistical relationships between input terms and output terms. Algorithm to generate language processing model may include a stochastic gradient descent algorithm, which may include a method that iteratively optimizes an objective function, such as an objective function representing a statistical estimation of relationships between terms, including relationships between input terms and output terms, in the form of a sum of relationships to be estimated. In an alternative or additional approach, sequential tokens may be modeled as chains, serving as the observations in a Hidden Markov Model (HMM). HMMs as used herein are statistical models with inference algorithms that that may be applied to the models. In such models, a hidden state to be estimated may include an association between extracted words, phrases, and/or other semantic units. There may be a finite number of categories to which an extracted word may pertain; an HMM inference algorithm, such as the forward-backward algorithm or the Viterbi algorithm, may be used to estimate the most likely discrete state given a word or sequence of words. Language processing module may combine two or more approaches. For instance, and without limitation, machine-learning program may use a combination of Naive-Bayes (NB), Stochastic Gradient Descent (SGD), and parameter grid-searching classification techniques; the result may include a classification algorithm that returns ranked associations.

Continuing to refer to FIG. 1, generating language processing model may include generating a vector space, which may be a collection of vectors, defined as a set of mathematical objects that can be added together under an operation of addition following properties of associativity, commutativity, existence of an identity element, and existence of an inverse element for each vector, and can be multiplied by scalar values under an operation of scalar multiplication compatible with field multiplication, and that has an identity element is distributive with respect to vector addition, and is distributive with respect to field addition. Each vector in an n-dimensional vector space may be represented by an n-tuple of numerical values. Each unique extracted word and/or language element as described above may be represented by a vector of the vector space. In an embodiment, each unique extracted and/or other language element may be represented by a dimension of vector space; as a non-limiting example, each element of a vector may include a number representing an enumeration of co-occurrences of the word and/or language element represented by the vector with another word and/or language element. Vectors may be normalized, scaled according to relative frequencies of appearance and/or file sizes. In an embodiment associating language elements to one another as described above may include computing a degree of vector similarity between a vector representing each language element and a vector representing another language element; vector similarity may be measured according to any norm for proximity and/or similarity of two vectors, including without limitation cosine similarity, which measures the similarity of two vectors by evaluating the cosine of the angle between the vectors, which can be computed using a dot product of the two vectors divided by the lengths of the two vectors. Degree of similarity may include any other geometric measure of distance between vectors.

Still referring to FIG. 1, language processing module may use a corpus of documents to generate associations between language elements in a language processing module, and diagnostic engine may then use such associations to analyze words extracted from one or more documents and determine that the one or more documents indicate significance of a category. In an embodiment, language module and/or processor 104 may perform this analysis using a selected set of significant documents, such as documents identified by one or more experts as representing good information; experts may identify or enter such documents via graphical user interface, or may communicate identities of significant documents according to any other suitable method of electronic communication, or by providing such identity to other persons who may enter such identifications into processor 104. Documents may be entered into a computing device by being uploaded by an expert or other persons using, without limitation, file transfer protocol (FTP) or other suitable methods for transmission and/or upload of documents; alternatively or additionally, where a document is identified by a citation, a uniform resource identifier (URI), uniform resource locator (URL) or other datum permitting unambiguous identification of the document, diagnostic engine may automatically obtain the document using such an identifier, for instance by submitting a request to a database or compendium of documents such as JSTOR as provided by Ithaka Harbors, Inc. of New York.

With continued reference to FIG. 1, a "keyword," for the purposes of this disclosure, is one or more tokens that have been assigned particular significance. In some embodiments, determining classification category 138 may be a function of one or more keywords 144. In some embodiments, processor 104 may look up keywords 144 in a lookup table to determine one or more classification categories 138, wherein lookup table may relate keywords to classification categories. In some embodiments, processor 104 may be configured to assign a classification category 138 as a function of detecting the classification category name in keywords 144 for slide. In some embodiments, category classifier 140 may be configured to determine a classification category 138 as a function of keywords 144. Category classifier 140 may be trained using training data correlating one or more keywords to classification categories.

With continued reference to FIG. 1, category classifier 140 may be configured to classify a slide 112 to a classification category 138 based on one or more elements of metadata 126. This is further discussed above. In some embodiments, category classifier 140 may be configured to classify slides 112 to classification categories as a function of multiple types of metadata 126. As non-limiting examples, multiple types of metadata 126 may include one or more of circularity, textual data, unique identifiers, fiducials, and the like. In some embodiments, category classifier 140 may include multiple classifier components, wherein each classifier component may be trained to classify a particular type of metadata 126 to classification category 138. For example, one classifier component may be trained to classify circularity to classification category while another may be trained to classify textual data to classification category.

The overall category classifier 140 may be trained using a loss function that seeks to minimize the losses from the classification of each of the individual types of metadata 126. In some embodiments, training data for category classifier 140 may include exemplary metadata correlated to exemplary classification categories. In some embodiments, category classifier 140 may include a clustering algorithm such a K-means, or any other clustering algorithm disclosed throughout this disclosure. In some embodiments, category classifier may be consistent with any classifier disclosed using this disclosure. In some embodiments, category classifier 140 may be created using machine-learning module 500 disclosed with reference to FIG. 5.

With continued reference to FIG. 1, in some embodiments, processor 104 may be configured to retrieve selected scanning profile 146 as a function of classification category 138 of the slide 112. In some embodiments, processor 104 may be configured to retrieve selected scanning profile 146 from a lookup table, wherein the lookup table may include classification categories 138 correlated to scanning profiles. A "scanning profile," for the purposes of this disclosure, is a set of parameters that can be used to configured a scanner. Selected scanning profile 146 may include a magnification parameter. A "magnification parameter," for the purposes of this disclosure, is a parameter defining a magnification level for the imaging of a slide using a scanner. For example, magnification parameter may include 1X, 2X, 5X, 10X, 20X, or 40X. In some embodiments, selected scanning profile 146 may include a z-stack layer parameter. Z-stack layer parameter may include information regarding z-stack that should be used for a slide 112. For example, z-stack parameter may include one or more z-levels or focuses that should be used to scan slide 112.

With continued reference to FIG. 1, the memory 108 may contain instructions further configuring the at least a processor 104 to image the slide 112 using the scanner 109 as a function of the magnification parameter and the z-stack layer parameter. For example, as a function of the magnification parameter, processor 104 may control scanner 109 to change lenses, objectives, or optical systems 110. For example, as a function of the magnification parameter, processor 104 may control scanner 109 to adjust a lens distance to alter magnification of slide 112. For example, as a function of z-stack layer parameter, processor 104 may control scanner 109 to change the focus distance of scanner 109.

With continued reference to FIG. 1, in some embodiments, selected scanning profile 146 may be communicated to scanner 109. For example, this may include wired or wireless communication. In some embodiments, scanner 109 may configure itself to scan in accordance with selected scanning profile 146 as a response to receiving selected scanning profile 146. In some embodiments, processor 104 may be configured to configure scanner 109 as a function of selected scanning profile 146. In some embodiments, plurality of scanning profiles 148 may be retrieved from a profile lookup table, wherein profile lookup table may include classification categories 138 correlated to one or more scanning profiles. In some embodiments, processor 104 may generate one or more control commands to control scanner 109 in response to selected scanning profile 146.

With continued reference to FIG. 1, in some embodiments, selecting selected scanning profile 146 from a plurality of scanning profiles as a function of classification category 138 may include selecting selected scanning profile 146 from a plurality of scanning profiles 148 as a function of classification category 138 as a function of a plurality of selection weights 150. A "selection weight" is a parameter that is used to select a scanning profile. In some embodiments, processor 104 may find a plurality of scanning profiles 148 associated with a classification category 138. In that scenario, selected scanning profile 146 may be determined to be the scanning profile with the highest selection weight 150. In some embodiments, where slide 112 has been classified to multiple classification categories 138, processor 104 may determine scanning profiles for each of the classification categories and select the scanning profile with the highest selection weight 150.

With continued reference to FIG. 1, in some embodiments, a utilization datum 152 may be incremented for the selected scanning profile 146. For the purposes of this disclosure, a "utilization datum" is a numerical value indicating the amount that a particular scanning profile has been selected as the selected scanning profile. For example, when selected scanning profile 146 is chosen, its utilization datum 152 may be incremented from 0 to 1, 1 to 2, or so forth. In some embodiments, a selection weight 150 may be updated as a function of the utilization datum 152. For example, selection weight 150 may be increased if utilization datum is incremented. In some embodiments, selection weight 150 may be normalized for utilization datum 152 such that it represents a relative usage between profiles. In some embodiments, selected scanning profile may be chosen from the plurality of scanning profiles as a function of selection weight 150.

With continued reference to FIG. 1, in some embodiments, plurality of scanning profiles 148 and/or selected scanning profile 146 may be retrieved from a scanning profile database 154. Scanning profile database 154 may be implemented, without limitation, as a relational database, a key-value retrieval database such as a NOSQL database, or any other format or structure for use as a database that a person skilled in the art would recognize as suitable upon review of the entirety of this disclosure. Scanning profile database 154 may alternatively or additionally be implemented using a distributed data storage protocol and/or data structure, such as a distributed hash table or the like. Scanning profile database 154 may include a plurality of data entries and/or records as described above. Data entries in a database may be flagged with or linked to one or more additional elements of information, which may be reflected in data entry cells and/or in linked tables such as tables related by one or more indices in a relational database. Persons skilled in the art, upon reviewing the entirety of this disclosure, will be aware of various ways in which data entries in a database may store, retrieve, organize, and/or reflect data and/or records as used herein, as well as categories and/or populations of data consistently with this disclosure.

With continued reference to FIG. 1, memory 108 contains instructions configuring processor 104 to image, using optical system 110 and optical sensor 113 of the scanner 109, slide 112 as a function of selected scanning profile 146. In some embodiments, imaging slide 112 as a function of selected scanning profile 146 may include controlling scanner 109 using one or more control commands. Control comments may, in some embodiments, be determined as a function of selected scanning profile 146. In some embodiments, selected scanning profile 146 may include one or more control commands or control command parameters.

With continued reference to FIG. 1, in some embodiments, imaging, using scanner 109, slide 112 as a function of selected scanning profile 146 may include training a region machine-learning model 158 using region training data, wherein the region training data comprises slide images correlated to labeled regions. Labeled regions may include, for example, regions or grids labeled according to the presence or absence of, as non-liming examples, Pathology Samples 124, fiducials 136, notes, and the like.

With continued reference to FIG. 1, in some embodiments, using scanner 109, slide 112 as a function of selected scanning profile 146 may include detecting, using region machine-learning model 158, a region of interest 156 of the slide 112. In some embodiments, detecting region of interest 156 of slide may include detecting a fiducial 136 surrounding a pathology sample. In some embodiments, region machine-learning model 158 may include a classifier trained on images with labels identifying Pathology Samples 124 and fiducials 136. In some embodiments, detecting region of interest 156 may include segmenting image 114 into a plurality of grids. Then classifier may be used to label each grid of the plurality of grids and a function of whether it contains Pathology Sample 124 or fiducial 136. In some embodiments, grids that are determined to contain Pathology Sample 124 or fiducial 136 may be determined to be part of region of interest 156. In some embodiments, this may include a grid extension algorithm or any method for identifying a region of interest disclosed in U.S. Nonprovisional Patent Application No. 18/736,818 (Attorney Docket No. 1519-163USU1), filed on June 7, 2024, and entitled "APPARATUS AND METHOD FOR DETECTING CONTENT OF INTEREST ON A SLIDE USING MACHINE LEARNING," the entirety of which is incorporated herein. In some embodiments, detecting, using region machine-learning model 158, a region of interest 156 of the slide 112, wherein region of interest 156 encompasses one or more fiducials 136 bounding a pathology sample 124 and the pathology sample

With continued reference to FIG. 1, in some embodiments, region machine-learning model may include a classifier model, wherein classifier model is configured to classify using at least a probe point from Macro Image 116, content of interest as accepted grid or rejected grid. In some embodiments, an accepted grid is a portion of image 114 and/or slide 112 which is part of region of interest 156. A rejected grid is a portion of image 114 and/or slide 112 that is not part of or is removed from region of interest 156. As used in this disclosure, a "grid" refers to a smaller region or segmented region of an image. As used in this example, a "classifier model" is a model designed to classify elements of similar characteristics into specific groups. In a non-limiting example, classifier model may be trained on labeled datasets, where each input is associated with a corresponding class label, where classifier model may learn the patterns and features that distinguish one class from another class. In a non-limiting example, classifier model may classify the grid of plurality of grids of at least an image 114 as either accepted grid or rejected grid. Classifier model may first analyze Macro Image 116 plurality of grids.

With continued reference to FIG. 1, apparatus 100 may include a machine learning model, wherein the machine learning model is trained using the plurality of macro images 114 and/or high magnification images 114 and a labeled dataset to classify the content of interest as accepted grid or rejected grids. In some embodiments, training set may include labeled high magnification images. In some embodiments, training set may include labeled macro images. In some embodiments, training set may include labeled images. In a non-limiting example, a "labeled dataset" may include a plurality of macro images and high magnification images containing a plurality of grids where the grids are labeled. Ins some embodiments, grids may be labeled as accepted grids or rejected grids to distinguish between one or more areas of interest and content of interest, such as, without limitation, pen mark and tissue cells respectively. In some embodiments, grids may be labeled based on their contents, such as cells, type of cell, pen mark, debris, or the like. In a non-limiting example, one or more machine learning models may be included in apparatus 100. In a non-limiting example, apparatus 100 may include classifier model that is specialized in determining grids containing content of interest in Macro Image 116. Continuing the previous non-limiting example, classifier model used to analyze Macro Image 116 may be trained on a plurality of macro images to detect a specified content of interest such as, without limitation, tissue cells.

With continued reference to FIG. 1, in some embodiments, where processor 104 is configured to calculate an image quality metric, portions of region of interest 156 (e.g., grids) identified as containing fiducials may be excluded from the image quality metric calculation. This may enable the calculation of a more accurate image quality metric. Calculation of image quality metric may be consistent with the calculation of any of the image quality metrics in U.S. Nonprovisional Application No. 18/602, 947 (Attorney Docket No. 1519-029USU1), filed on March 12, 2024, and entitled "SYSTEMS AND METHODS FOR INLINE QUALITY CONTROL OF SLIDE DIGITIZATION," the entirety of which is incorporated herein

With continued reference to FIG. 1, in some embodiments processor 104 may be configured to configure, using a set of application programming interfaces 160, the scanner 109. Processor 104 may be further configured to image the slide 112 at a macro magnification using the optical system 110 and optical sensor 113 of the scanner 109. The processor may be further configured to configure using the set of application programming interfaces 160, an algorithm pipeline for processing the macro image of the slide. Algorithm pipeline may include a set of algorithms and/or order of algorithms for processing an image. processing, using the at least a processor, the macro image of the slide using the algorithm pipeline. Processor 104 may be further configured to process the macro image of the slide using the algorithm pipeline.

In some embodiments processor 104 may be configured to configure, using a set of application programming interfaces 160, image acquisition of slide 112 using scanner at high magnification. In some embodiments processor 104 may be configured to configure, using a set of application programming interfaces 160, image acquisition of slide 112 using scanner at 20x magnification. In some embodiments processor 104 may be configured to configure, using a set of application programming interfaces 160, image acquisition of slide 112 using scanner at 40x magnification. For the purposes of this disclosure, an "application programming interface" is a protocol that is used by two or more applications to communicate with each other. In some embodiments, processor may be configured to configure, using a set of application programming interface (API), the download of require software containers for inline compute. In some embodiments, selected scanning profile 146 may be associated with one or more software containers. In some embodiments, processor 104 may be configured to configure, using a set of application programming interface (API), the algorithms pipeline for processing the macro image of the glass slide. In some embodiments, processor 104 may be configured to configure the image acquisition of the glass slide at high magnification. In some embodiments, processor 104 may be configured to configure, using a set of configurable parameters, the image acquisition of the glass slide at high magnification. In some embodiments, processor 104 may be configured to configure, using a set of application programming interface (API), the algorithms pipeline for processing the high magnification images of the glass slide. In some embodiments, processor 104 may be configured to configure, using the classification category of the glass slide, the configured image acquisition and algorithms pipelines as a scanning profile to the associated meta-data.

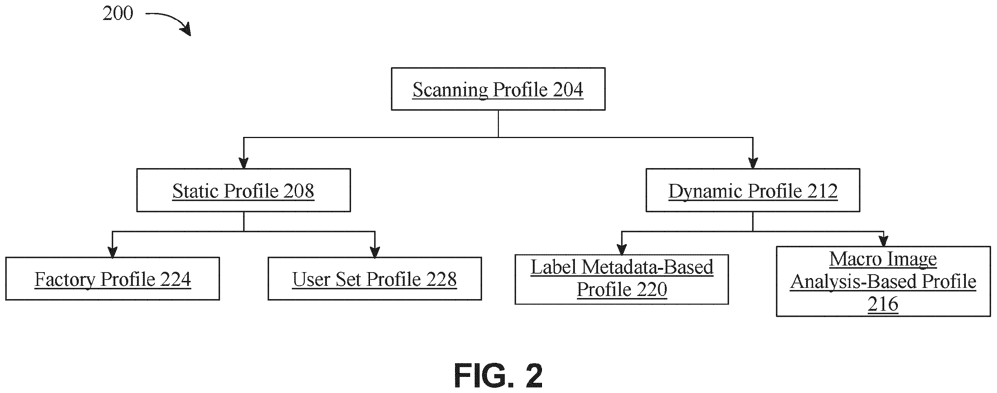

Referring now to FIG. 2, a scanning profile diagram 200 is shown. In some embodiments, scanning profile 204 may include a static profile 208 or a dynamic profile 212. Scanning profile 204 may be consistent with any scanning profile in this disclosure. A "static profile," for the purposes of this disclosure, is a scanning profile that is not responsive to slide metadata or image analysis of the slide. A "dynamic profile," for the purposes of this disclosure, is a scanning profile that is responsive to slide metadata or image analysis of the slide.

With continued reference to FIG. 2, Scanning profiles can be created by the user and applied in one of the above manners. If a scanning profile 204 is set for a scanner as a Static Profile 208 then the same scanning profile may be applied to all slides being scanned until another profile is set by a user. If the profile selection is allowed to vary with each slide (e.g., dynamic profile 212), then the profile may be dynamically selected based on the content extracted from the slide. The Macro image analysis-based profiles 216 may provide a mechanism to select the required profile driven by content of interest on the slide. For example, if the macro image analysis detects particular hue, then a profile specific for that hue can be used for scanning the slide. Or, if a certain circularity is detected, then a particular scanning profile may be used. Label metadata-based profiles 220 may provide a mechanism to select the required profile driven by content of the label. This may be consistent with any metadata extracted from the label discussed with reference to FIG. 1. In some embodiments, as an example, the type of slide may be used to select a scanning profile.

With continued reference to FIG. 2, regarding static profiles 208, static profile 208 may include a factory profile 224. In some embodiments, static profile may include a user set profile 228. User set profile 228 may be selected by a user and may be received by a processor through a user input.

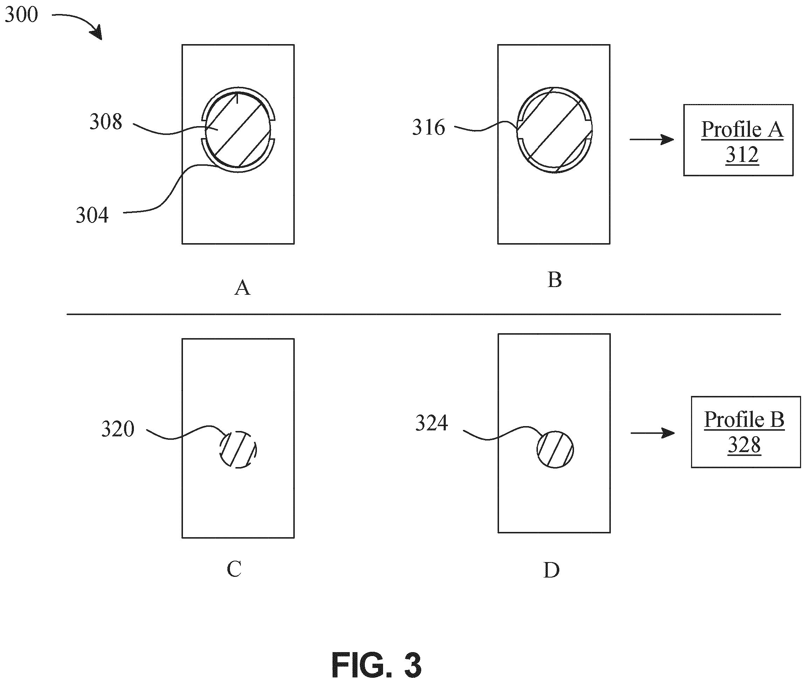

Referring now to FIG. 3, a diagram 300 of a macro image analysis automated profile selection is shown. Elements A and B show one type of slide with fiducial markers 304 on the glass slide. The pathology sample 308, in this case, may be placed within the bounds of the fiducial markers 304. The macro image analysis, as discussed further with reference to FIG. 1, may detect fiducial marker 304 and uses it as a decision factor to select profile A 312. As part of profile A 312, the region of interest 316 for scanning the slide may be increased to include the actual pathology sample 308 with the fiducial markers 304 around it.

With continued reference to FIG. 3, elements C and D show another type of slide where the pathology sample 320 is placed in a circular form with specific diameter 324. The macro image analysis may detect the circularity and the diameter of the circle and use it as a decision factor to select profile B 328.

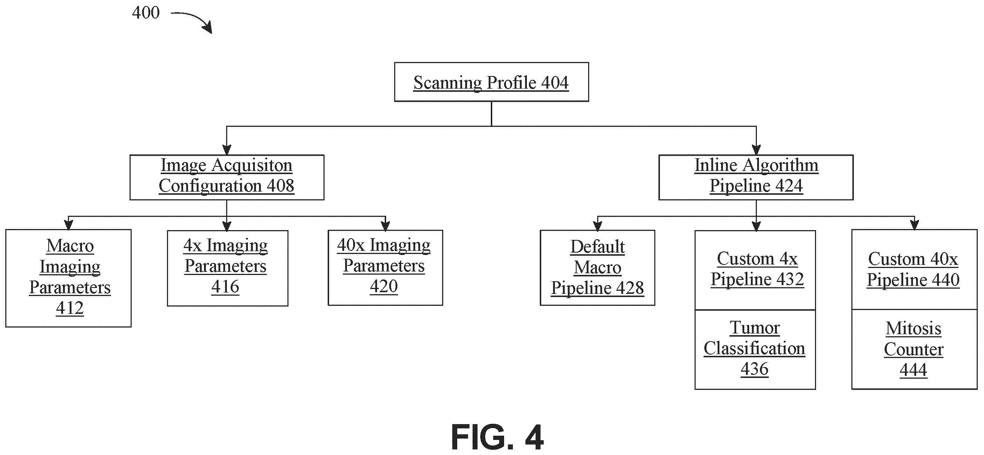

Referring now to FIG. 4, a diagram 400 of components of scanning profiles 404 is shown. Scanning profile 404 may include image acquisition configuration 408. Image acquisition configuration 408 may include one or more parameters to configure a scanner to perform various types of imaging such as, but not limited to macro imaging, 4x imaging, and/or 40x imaging. In some embodiments, image acquisition configuration 408 may include macro imaging parameters 412. In some embodiments, image acquisition configuration 408 may include 4x imaging parameters 416. In some embodiments, image acquisition configuration 408 may include 40x imaging parameters 420.

With continued reference to FIG. 4, scanning profile 404 may include inline algorithm pipeline 424. In some embodiments, inline algorithm pipeline 424 may include a default macro pipeline 428. For the purposes of this disclosure, an "inline algorithm" is an algorithm that is configured to be called while another process is happening. For example, inline algorithms may be configured to run while scanning is occurring. Inline algorithms may provide various outputs which may be used to affect scanning while it is ongoing. In some embodiments, inline algorithm pipeline 424 may include a custom 4x pipeline 432. In some embodiments, custom 4x pipeline 432 may include a tumor classification 436 module. In some embodiments, inline algorithm pipeline 424 may include a custom 40x pipeline 440. In some embodiments, custom 40x pipeline 440 may include a mitosis counter 444 module.

With continued reference to FIG. 4. Diagram 400 may show an example of configurable components that make a scanning profile. Here a scanning profile may include macro imaging, followed by 4x imaging, followed by 40x imaging. A plurality of imaging parameters can be part of scanning profile 404. A person of ordinary skill in the art, having reviewed the entirety of this disclosure, would appreciate that the scanning profile 404 shown is merely one example with a few parameters and a plurality of other parameters are possible.

Referring now to FIG. 5, an exemplary embodiment of a machine-learning module 500 that may perform one or more machine-learning processes as described in this disclosure is illustrated. Machine-learning module may perform determinations, classification, and/or analysis steps, methods, processes, or the like as described in this disclosure using machine learning processes. A "machine learning process," as used in this disclosure, is a process that automatedly uses training data 504 to generate an algorithm instantiated in hardware or software logic, data structures, and/or functions that will be performed by a computing device/module to produce outputs 508 given data provided as inputs 512; this is in contrast to a non-machine learning software program where the commands to be executed are determined in advance by a user and written in a programming language.

Still referring to FIG. 5, "training data," as used herein, is data containing correlations that a machine-learning process may use to model relationships between two or more categories of data elements. For instance, and without limitation, training data 504 may include a plurality of data entries, also known as "training examples," each entry representing a set of data elements that were recorded, received, and/or generated together; data elements may be correlated by shared existence in a given data entry, by proximity in a given data entry, or the like. Multiple data entries in training data 504 may evince one or more trends in correlations between categories of data elements; for instance, and without limitation, a higher value of a first data element belonging to a first category of data element may tend to correlate to a higher value of a second data element belonging to a second category of data element, indicating a possible proportional or other mathematical relationship linking values belonging to the two categories. Multiple categories of data elements may be related in training data 504 according to various correlations; correlations may indicate causative and/or predictive links between categories of data elements, which may be modeled as relationships such as mathematical relationships by machine-learning processes as described in further detail below. Training data 504 may be formatted and/or organized by categories of data elements, for instance by associating data elements with one or more descriptors corresponding to categories of data elements. As a non-limiting example, training data 504 may include data entered in standardized forms by persons or processes, such that entry of a given data element in a given field in a form may be mapped to one or more descriptors of categories. Elements in training data 504 may be linked to descriptors of categories by tags, tokens, or other data elements; for instance, and without limitation, training data 504 may be provided in fixed-length formats, formats linking positions of data to categories such as comma-separated value (CSV) formats and/or self-describing formats such as extensible markup language (XML), JavaScript Object Notation (JSON), or the like, enabling processes or devices to detect categories of data.

Alternatively or additionally, and continuing to refer to FIG. 5, training data 504 may include one or more elements that are not categorized; that is, training data 504 may not be formatted or contain descriptors for some elements of data. Machine-learning algorithms and/or other processes may sort training data 504 according to one or more categorizations using, for instance, natural language processing algorithms, tokenization, detection of correlated values in raw data and the like; categories may be generated using correlation and/or other processing algorithms. As a non-limiting example, in a corpus of text, phrases making up a number "n" of compound words, such as nouns modified by other nouns, may be identified according to a statistically significant prevalence of n-grams containing such words in a particular order; such an n-gram may be categorized as an element of language such as a "word" to be tracked similarly to single words, generating a new category as a result of statistical analysis. Similarly, in a data entry including some textual data, a person's name may be identified by reference to a list, dictionary, or other compendium of terms, permitting ad-hoc categorization by machine-learning algorithms, and/or automated association of data in the data entry with descriptors or into a given format. The ability to categorize data entries automatedly may enable the same training data 504 to be made applicable for two or more distinct machine-learning algorithms as described in further detail below. Training data 504 used by machine-learning module 500 may correlate any input data as described in this disclosure to any output data as described in this disclosure. As a non-limiting illustrative metadata correlated to classification categories, or images correlated to regions of interest.

Further referring to FIG. 5, training data may be filtered, sorted, and/or selected using one or more supervised and/or unsupervised machine-learning processes and/or models as described in further detail below; such models may include without limitation a training data classifier 516. Training data classifier 516 may include a "classifier," which as used in this disclosure is a machine-learning model as defined below, such as a data structure representing and/or using a mathematical model, neural net, or program generated by a machine learning algorithm known as a "classification algorithm," as described in further detail below, that sorts inputs into categories or bins of data, outputting the categories or bins of data and/or labels associated therewith. A classifier may be configured to output at least a datum that labels or otherwise identifies a set of data that are clustered together, found to be close under a distance metric as described below, or the like. A distance metric may include any norm, such as, without limitation, a Pythagorean norm. Machine-learning module 500 may generate a classifier using a classification algorithm, defined as a processes whereby a computing device and/or any module and/or component operating thereon derives a classifier from training data 504. Classification may be performed using, without limitation, linear classifiers such as without limitation logistic regression and/or naive Bayes classifiers, nearest neighbor classifiers such as k-nearest neighbors classifiers, support vector machines, least squares support vector machines, fisher's linear discriminant, quadratic classifiers, decision trees, boosted trees, random forest classifiers, learning vector quantization, and/or neural network-based classifiers. As a non-limiting example, training data classifier 516 may classify elements of training data to types of slides, types of pathology samples, and the like.

Still referring to FIG. 5, Computing device may be configured to generate a classifier using a Naive Bayes classification algorithm. Naive Bayes classification algorithm generates classifiers by assigning class labels to problem instances, represented as vectors of element values. Class labels are drawn from a finite set.

Naive Bayes classification algorithm may include generating a family of algorithms that assume that the value of a particular element is independent of the value of any other element, given a class variable. Naive Bayes classification algorithm may be based on Bayes Theorem expressed as P(A/B)= P(B/A) P(A)÷P(B), where P(A/B) is the probability of hypothesis A given data B also known as posterior probability; P(B/A) is the probability of data B given that the hypothesis A was true; P(A) is the probability of hypothesis A being true regardless of data also known as prior probability of A; and P(B) is the probability of the data regardless of the hypothesis. A naive Bayes algorithm may be generated by first transforming training data into a frequency table. Computing device may then calculate a likelihood table by calculating probabilities of different data entries and classification labels. Computing device may utilize a naive Bayes equation to calculate a posterior probability for each class. A class containing the highest posterior probability is the outcome of prediction. Naive Bayes classification algorithm may include a gaussian model that follows a normal distribution. Naive Bayes classification algorithm may include a multinomial model that is used for discrete counts. Naive Bayes classification algorithm may include a Bernoulli model that may be utilized when vectors are binary.

With continued reference to FIG. 5, Computing device may be configured to generate a classifier using a K-nearest neighbors (KNN) algorithm. A "K-nearest neighbors algorithm" as used in this disclosure, includes a classification method that utilizes feature similarity to analyze how closely out-of-sample- features resemble training data to classify input data to one or more clusters and/or categories of features as represented in training data; this may be performed by representing both training data and input data in vector forms, and using one or more measures of vector similarity to identify classifications within training data, and to determine a classification of input data. K-nearest neighbors algorithm may include specifying a K-value, or a number directing the classifier to select the k most similar entries training data to a given sample, determining the most common classifier of the entries in the database, and classifying the known sample; this may be performed recursively and/or iteratively to generate a classifier that may be used to classify input data as further samples. For instance, an initial set of samples may be performed to cover an initial heuristic and/or "first guess" at an output and/or relationship, which may be seeded, without limitation, using expert input received according to any process as described herein. As a non-limiting example, an initial heuristic may include a ranking of associations between inputs and elements of training data. Heuristic may include selecting some number of highest-ranking associations and/or training data elements.

With continued reference to FIG. 5, generating k-nearest neighbors algorithm may generate a first vector output containing a data entry cluster, generating a second vector output containing an input data, and calculate the distance between the first vector output and the second vector output using any suitable norm such as cosine similarity, Euclidean distance measurement, or the like. Each vector output may be represented, without limitation, as an n-tuple of values, where n is at least two values. Each value of n-tuple of values may represent a measurement or other quantitative value associated with a given category of data, or attribute, examples of which are provided in further detail below; a vector may be represented, without limitation, in n-dimensional space using an axis per category of value represented in n-tuple of values, such that a vector has a geometric direction characterizing the relative quantities of attributes in the n-tuple as compared to each other. Two vectors may be considered equivalent where their directions, and/or the relative quantities of values within each vector as compared to each other, are the same; thus, as a non-limiting example, a vector represented as [5, 10, 15] may be treated as equivalent, for purposes of this disclosure, as a vector represented as [1, 2, 3]. Vectors may be more similar where their directions are more similar, and more different where their directions are more divergent; however, vector similarity may alternatively or additionally be determined using averages of similarities between like attributes, or any other measure of similarity suitable for any n-tuple of values, or aggregation of numerical similarity measures for the purposes of loss functions as described in further detail below. Any vectors as described herein may be scaled, such that each vector represents each attribute along an equivalent scale of values. Each vector may be "normalized," or divided by a "length" attribute, such as a length attribute $l$ as derived using a Pythagorean norm: $l = \sqrt{\sum_{i=0}^{n} a_i^2}$, where $a_i$ is attribute number $i$ of the vector. Scaling and/or normalization may function to make vector comparison independent of absolute quantities of attributes, while preserving any dependency on similarity of attributes; this may, for instance, be advantageous where cases represented in training data are represented by different quantities of samples, which may result in proportionally equivalent vectors with divergent values.

With further reference to FIG. 5, training examples for use as training data may be selected from a population of potential examples according to cohorts relevant to an analytical problem to be solved, a classification task, or the like. Alternatively or additionally, training data may be selected to span a set of likely circumstances or inputs for a machine-learning model and/or process to encounter when deployed. For instance, and without limitation, for each category of input data to a machine-learning process or model that may exist in a range of values in a population of phenomena such as images, user data, process data, physical data, or the like, a computing device, processor, and/or machine-learning model may select training examples representing each possible value on such a range and/or a representative sample of values on such a range. Selection of a representative sample may include selection of training examples in proportions matching a statistically determined and/or predicted distribution of such values according to relative frequency, such that, for instance, values encountered more frequently in a population of data so analyzed are represented by more training examples than values that are encountered less frequently. Alternatively or additionally, a set of training examples may be compared to a collection of representative values in a database and/or presented to a user, so that a process can detect, automatically or via user input, one or more values that are not included in the set of training examples. Computing device, processor, and/or module may automatically generate a missing training example; this may be done by receiving and/or retrieving a missing input and/or output value and correlating the missing input and/or output value with a corresponding output and/or input value collocated in a data record with the retrieved value, provided by a user and/or other device, or the like.

Continuing to refer to FIG. 5, computer, processor, and/or module may be configured to preprocess training data. "Preprocessing" training data, as used in this disclosure, is transforming training data from raw form to a format that can be used for training a machine learning model. Preprocessing may include sanitizing, feature selection, feature scaling, data augmentation and the like.

Still referring to FIG. 5, computer, processor, and/or module may be configured to sanitize training data. "Sanitizing" training data, as used in this disclosure, is a process whereby training examples are removed that interfere with convergence of a machine-learning model and/or process to a useful result. For instance, and without limitation, a training example may include an input and/or output value that is an outlier from typically encountered values, such that a machine-learning algorithm using the training example will be adapted to an unlikely amount as an input and/or output; a value that is more than a threshold number of standard deviations away from an average, mean, or expected value, for instance, may be eliminated. Alternatively or additionally, one or more training examples may be identified as having poor quality data, where "poor quality" is defined as having a signal to noise ratio below a threshold value. Sanitizing may include steps such as removing duplicative or otherwise redundant data, interpolating missing data, correcting data errors, standardizing data, identifying outliers, and the like. In a nonlimiting example, sanitization may include utilizing algorithms for identifying duplicate entries or spell-check algorithms.

As a non-limiting example, and with further reference to FIG. 5, images used to train an image classifier or other machine-learning model and/or process that takes images as inputs or generates images as outputs may be rejected if image quality is below a threshold value. For instance, and without limitation, computing device, processor, and/or module may perform blur detection, and eliminate one or more Blur detection may be performed, as a non-limiting example, by taking Fourier transform, or an approximation such as a Fast Fourier Transform (FFT) of the image and analyzing a distribution of low and high frequencies in the resulting frequency-domain depiction of the image; numbers of high-frequency values below a threshold level may indicate blurriness. As a further non-limiting example, detection of blurriness may be performed by convolving an image, a channel of an image, or the like with a Laplacian kernel; this may generate a numerical score reflecting a number of rapid changes in intensity shown in the image, such that a high score indicates clarity and a low score indicates blurriness. Blurriness detection may be performed using a gradient-based operator, which measures operators based on the gradient or first derivative of an image, based on the hypothesis that rapid changes indicate sharp edges in the image, and thus are indicative of a lower degree of blurriness. Blur detection may be performed using Wavelet -based operator, which takes advantage of the capability of coefficients of the discrete wavelet transform to describe the frequency and spatial content of images. Blur detection may be performed using statistics-based operators take advantage of several image statistics as texture descriptors in order to compute a focus level. Blur detection may be performed by using discrete cosine transform (DCT) coefficients in order to compute a focus level of an image from its frequency content.

Continuing to refer to FIG. 5, computing device, processor, and/or module may be configured to precondition one or more training examples. For instance, and without limitation, where a machine learning model and/or process has one or more inputs and/or outputs requiring, transmitting, or receiving a certain number of bits, samples, or other units of data, one or more training examples' elements to be used as or compared to inputs and/or outputs may be modified to have such a number of units of data. For instance, a computing device, processor, and/or module may convert a smaller number of units, such as in a low pixel count image, into a desired number of units, for instance by upsampling and interpolating. As a non-limiting example, a low pixel count image may have 100 pixels, however a desired number of pixels may be 128. Processor may interpolate the low pixel count image to convert the 100 pixels into 128 pixels. It should also be noted that one of ordinary skill in the art, upon reading this disclosure, would know the various methods to interpolate a smaller number of data units such as samples, pixels, bits, or the like to a desired number of such units. In some instances, a set of interpolation rules may be trained by sets of highly detailed inputs and/or outputs and corresponding inputs and/or outputs downsampled to smaller numbers of units, and a neural network or other machine learning model that is trained to predict interpolated pixel values using the training data. As a non-limiting example, a sample input and/or output, such as a sample picture, with sample-expanded data units (e.g., pixels added between the original pixels) may be input to a neural network or machine-learning model and output a pseudo replica sample-picture with dummy values assigned to pixels between the original pixels based on a set of interpolation rules. As a non-limiting example, in the context of an image classifier, a machine-learning model may have a set of interpolation rules trained by sets of highly detailed images and images that have been downsampled to smaller numbers of pixels, and a neural network or other machine learning model that is trained using those examples to predict interpolated pixel values in a facial picture context. As a result, an input with sample-expanded data units (the ones added between the original data units, with dummy values) may be run through a trained neural network and/or model, which may fill in values to replace the dummy values. Alternatively or additionally, processor, computing device, and/or module may utilize sample expander methods, a low-pass filter, or both. As used in this disclosure, a "low-pass filter" is a filter that passes signals with a frequency lower than a selected cutoff frequency and attenuates signals with frequencies higher than the cutoff frequency. The exact frequency response of the filter depends on the filter design. Computing device, processor, and/or module may use averaging, such as luma or chroma averaging in images, to fill in data units in between original data units.

In some embodiments, and with continued reference to FIG. 5, computing device, processor, and/or module may down-sample elements of a training example to a desired lower number of data elements. As a non-limiting example, a high pixel count image may have 256 pixels, however a desired number of pixels may be 128. Processor may down-sample the high pixel count image to convert the 256 pixels into 128 pixels. In some embodiments, processor may be configured to perform downsampling on data. Downsampling, also known as decimation, may include removing every Nth entry in a sequence of samples, all but every Nth entry, or the like, which is a process known as "compression," and may be performed, for instance by an N-sample compressor implemented using hardware or software. Anti-aliasing and/or anti-imaging filters, and/or low-pass filters, may be used to clean up side-effects of compression.

Further referring to FIG. 5, feature selection includes narrowing and/or filtering training data to exclude features and/or elements, or training data including such elements, that are not relevant to a purpose for which a trained machine-learning model and/or algorithm is being trained, and/or collection of features and/or elements, or training data including such elements, on the basis of relevance or utility for an intended task or purpose for a trained machine-learning model and/or algorithm is being trained. Feature selection may be implemented, without limitation, using any process described in this disclosure, including without limitation using training data classifiers, exclusion of outliers, or the like.

With continued reference to FIG. 5, feature scaling may include, without limitation, normalization of data entries, which may be accomplished by dividing numerical fields by norms thereof, for instance as performed for vector normalization. Feature scaling may include absolute maximum scaling, wherein each quantitative datum is divided by the maximum absolute value of all quantitative data of a set or subset of quantitative data. Feature scaling may include min-max scaling, in which each value $X$ has a minimum value $X_{min}$ in a set or subset of values subtracted therefrom, with the result divided by the range of the values, give maximum value in the set or subset $X_{max}$:

$$X_{new} = \frac{X - X_{min}}{X_{max} - X_{min}}$$

. Feature scaling may include mean normalization, which involves use of a mean value of a set and/or subset of values, $X_{mean}$ with maximum and minimum values:

$$X_{new} = \frac{X - X_{mean}}{X_{max} - X_{min}}$$

. Feature scaling may include standardization, where a difference between $X$ and $X_{mean}$ is divided by a standard deviation $\sigma$ of a set or subset of values:

$$X_{new} = \frac{X - X_{mean}}{\sigma}$$

. Scaling may be performed using a median value of a a set or subset $X_{median}$ and/or interquartile range (IQR), which represents the difference between the 25th percentile value and the 50th percentile value (or closest values thereto by a rounding protocol), such as:

$$X_{new} = \frac{X - X_{median}}{IQR}$$

. Persons skilled in the art, upon reviewing the entirety of this disclosure, will be aware of various alternative or additional approaches that may be used for feature scaling.

Further referring to FIG. 5, computing device, processor, and/or module may be configured to perform one or more processes of data augmentation. "Data augmentation" as used in this disclosure is addition of data to a training set using elements and/or entries already in the dataset. Data augmentation may be accomplished, without limitation, using interpolation, generation of modified copies of existing entries and/or examples, and/or one or more generative AI processes, for instance using deep neural networks and/or generative adversarial networks; generative processes may be referred to alternatively in this context as "data synthesis" and as creating "synthetic data." Augmentation may include performing one or more transformations on data, such as geometric, color space, affine, brightness, cropping, and/or contrast transformations of images.

Still referring to FIG. 5, machine-learning module 500 may be configured to perform a lazy-learning process 520 and/or protocol, which may alternatively be referred to as a "lazy loading" or "call-when-needed" process and/or protocol, may be a process whereby machine learning is conducted upon receipt of an input to be converted to an output, by combining the input and training set to derive the algorithm to be used to produce the output on demand. For instance, an initial set of simulations may be performed to cover an initial heuristic and/or "first guess" at an output and/or relationship. As a non-limiting example, an initial heuristic may include a ranking of associations between inputs and elements of training data 504. Heuristic may include selecting some number of highest-ranking associations and/or training data 504 elements. Lazy learning may implement any suitable lazy learning algorithm, including without limitation a K-nearest neighbors algorithm, a lazy naive Bayes algorithm, or the like; persons skilled in the art, upon reviewing the entirety of this disclosure, will be aware of various lazy-learning algorithms that may be applied to generate outputs as described in this disclosure, including without limitation lazy learning applications of machine-learning algorithms as described in further detail below.

Alternatively or additionally, and with continued reference to FIG. 5, machine-learning processes as described in this disclosure may be used to generate machine-learning models 524. A "machine-learning model," as used in this disclosure, is a data structure representing and/or instantiating a mathematical and/or algorithmic representation of a relationship between inputs and outputs, as generated using any machine-learning process including without limitation any process as described above, and stored in memory; an input is submitted to a machine-learning model 524 once created, which generates an output based on the relationship that was derived. For instance, and without limitation, a linear regression model, generated using a linear regression algorithm, may compute a linear combination of input data using coefficients derived during machine-learning processes to calculate an output datum. As a further non-limiting example, a machine-learning model 524 may be generated by creating an artificial neural network, such as a convolutional neural network comprising an input layer of nodes, one or more intermediate layers, and an output layer of nodes. Connections between nodes may be created via the process of "training" the network, in which elements from a training data 504 set are applied to the input nodes, a suitable training algorithm (such as Levenberg-Marquardt, conjugate gradient, simulated annealing, or other algorithms) is then used to adjust the connections and weights between nodes in adjacent layers of the neural network to produce the desired values at the output nodes. This process is sometimes referred to as deep learning.

Still referring to FIG. 5, machine-learning algorithms may include at least a supervised machine-learning process 528. At least a supervised machine-learning process 528, as defined herein, include algorithms that receive a training set relating a number of inputs to a number of outputs, and seek to generate one or more data structures representing and/or instantiating one or more mathematical relations relating inputs to outputs, where each of the one or more mathematical relations is optimal according to some criterion specified to the algorithm using some scoring function. For instance, a supervised learning algorithm may include inputs as described in this disclosure as inputs, outputs as described in this disclosure as outputs, and a scoring function representing a desired form of relationship to be detected between inputs and outputs; scoring function may, for instance, seek to maximize the probability that a given input and/or combination of elements inputs is associated with a given output to minimize the probability that a given input is not associated with a given output. Scoring function may be expressed as a risk function representing an "expected loss" of an algorithm relating inputs to outputs, where loss is computed as an error function representing a degree to which a prediction generated by the relation is incorrect when compared to a given input-output pair provided in training data 504. Persons skilled in the art, upon reviewing the entirety of this disclosure, will be aware of various possible variations of at least a supervised machine-learning process 528 that may be used to determine relation between inputs and outputs. Supervised machine-learning processes may include classification algorithms as defined above.

With further reference to FIG. 5, training a supervised machine-learning process may include, without limitation, iteratively updating coefficients, biases, weights based on an error function, expected loss, and/or risk function. For instance, an output generated by a supervised machine-learning model using an input example in a training example may be compared to an output example from the training example; an error function may be generated based on the comparison, which may include any error function suitable for use with any machine-learning algorithm described in this disclosure, including a square of a difference between one or more sets of compared values or the like. Such an error function may be used in turn to update one or more weights, biases, coefficients, or other parameters of a machine-learning model through any suitable process including without limitation gradient descent processes, least-squares processes, and/or other processes described in this disclosure. This may be done iteratively and/or recursively to gradually tune such weights, biases, coefficients, or other parameters. Updating may be performed, in neural networks, using one or more back-propagation algorithms. Iterative and/or recursive updates to weights, biases, coefficients, or other parameters as described above may be performed until currently available training data is exhausted and/or until a convergence test is passed, where a "convergence test" is a test for a condition selected as indicating that a model and/or weights, biases, coefficients, or other parameters thereof has reached a degree of accuracy. A convergence test may, for instance, compare a difference between two or more successive errors or error function values, where differences below a threshold amount may be taken to indicate convergence. Alternatively or additionally, one or more errors and/or error function values evaluated in training iterations may be compared to a threshold.

Still referring to FIG. 5, a computing device, processor, and/or module may be configured to perform method, method step, sequence of method steps and/or algorithm described in reference to this figure, in any order and with any degree of repetition. For instance, a computing device, processor, and/or module may be configured to perform a single step, sequence and/or algorithm repeatedly until a desired or commanded outcome is achieved; repetition of a step or a sequence of steps may be performed iteratively and/or recursively using outputs of previous repetitions as inputs to subsequent repetitions, aggregating inputs and/or outputs of repetitions to produce an aggregate result, reduction or decrement of one or more variables such as global variables, and/or division of a larger processing task into a set of iteratively addressed smaller processing tasks. A computing device, processor, and/or module may perform any step, sequence of steps, or algorithm in parallel, such as simultaneously and/or substantially simultaneously performing a step two or more times using two or more parallel threads, processor cores, or the like; division of tasks between parallel threads and/or processes may be performed according to any protocol suitable for division of tasks between iterations. Persons skilled in the art, upon reviewing the entirety of this disclosure, will be aware of various ways in which steps, sequences of steps, processing tasks, and/or data may be subdivided, shared, or otherwise dealt with using iteration, recursion, and/or parallel processing.

Further referring to FIG. 5, machine learning processes may include at least an unsupervised machine-learning processes 532. An unsupervised machine-learning process, as used herein, is a process that derives inferences in datasets without regard to labels; as a result, an unsupervised machine-learning process may be free to discover any structure, relationship, and/or correlation provided in the data. Unsupervised processes 532 may not require a response variable; unsupervised processes 532may be used to find interesting patterns and/or inferences between variables, to determine a degree of correlation between two or more variables, or the like.

Still referring to FIG. 5, machine-learning module 500 may be designed and configured to create a machine-learning model 524 using techniques for development of linear regression models. Linear regression models may include ordinary least squares regression, which aims to minimize the square of the difference between predicted outcomes and actual outcomes according to an appropriate norm for measuring such a difference (e.g. a vector-space distance norm); coefficients of the resulting linear equation may be modified to improve minimization. Linear regression models may include ridge regression methods, where the function to be minimized includes the least-squares function plus term multiplying the square of each coefficient by a scalar amount to penalize large coefficients. Linear regression models may include least absolute shrinkage and selection operator (LASSO) models, in which ridge regression is combined with multiplying the least-squares term by a factor of 1 divided by double the number of samples. Linear regression models may include a multi-task lasso model wherein the norm applied in the least-squares term of the lasso model is the Frobenius norm amounting to the square root of the sum of squares of all terms. Linear regression models may include the elastic net model, a multi-task elastic net model, a least angle regression model, a LARS lasso model, an orthogonal matching pursuit model, a Bayesian regression model, a logistic regression model, a stochastic gradient descent model, a perceptron model, a passive aggressive algorithm, a robustness regression model, a Huber regression model, or any other suitable model that may occur to persons skilled in the art upon reviewing the entirety of this disclosure. Linear regression models may be generalized in an embodiment to polynomial regression models, whereby a polynomial equation (e.g. a quadratic, cubic or higher-order equation) providing a best predicted output/actual output fit is sought; similar methods to those described above may be applied to minimize error functions, as will be apparent to persons skilled in the art upon reviewing the entirety of this disclosure.

Continuing to refer to FIG. 5, machine-learning algorithms may include, without limitation, linear discriminant analysis. Machine-learning algorithm may include quadratic discriminant analysis. Machine-learning algorithms may include kernel ridge regression. Machine-learning algorithms may include support vector machines, including without limitation support vector classification-based regression processes. Machine-learning algorithms may include stochastic gradient descent algorithms, including classification and regression algorithms based on stochastic gradient descent. Machine-learning algorithms may include nearest neighbors algorithms. Machine-learning algorithms may include various forms of latent space regularization such as variational regularization. Machine-learning algorithms may include Gaussian processes such as Gaussian Process Regression. Machine-learning algorithms may include cross-decomposition algorithms, including partial least squares and/or canonical correlation analysis. Machine-learning algorithms may include naive Bayes methods. Machine-learning algorithms may include algorithms based on decision trees, such as decision tree classification or regression algorithms. Machine-learning algorithms may include ensemble methods such as bagging meta-estimator, forest of randomized trees, Ada-Boost, gradient tree boosting, and/or voting classifier methods. Machine-learning algorithms may include neural net algorithms, including convolutional neural net processes.

Still referring to FIG. 5, a machine-learning model and/or process may be deployed or instantiated by incorporation into a program, apparatus, system and/or module. For instance, and without limitation, a machine-learning model, neural network, and/or some or all parameters thereof may be stored and/or deployed in any memory or circuitry. Parameters such as coefficients, weights, and/or biases may be stored as circuit-based constants, such as arrays of wires and/or binary inputs and/or outputs set at logic "1" and "0" voltage levels in a logic circuit to represent a number according to any suitable encoding system including twos complement or the like or may be stored in any volatile and/or non-volatile memory. Similarly, mathematical operations and input and/or output of data to or from models, neural network layers, or the like may be instantiated in hardware circuitry and/or in the form of instructions in firmware, machine-code such as binary operation code instructions, assembly language, or any higher-order programming language. Any technology for hardware and/or software instantiation of memory, instructions, data structures, and/or algorithms may be used to instantiate a machine-learning process and/or model, including without limitation any combination of production and/or configuration of non-reconfigurable hardware elements, circuits, and/or modules such as without limitation ASICs, production and/or configuration of reconfigurable hardware elements, circuits, and/or modules such as without limitation FPGAs, production and/or of non-reconfigurable and/or configuration non-rewritable memory elements, circuits, and/or modules such as without limitation non-rewritable ROM, production and/or configuration of reconfigurable and/or rewritable memory elements, circuits, and/or modules such as without limitation rewritable ROM or other memory technology described in this disclosure, and/or production and/or configuration of any computing device and/or component thereof as described in this disclosure. Such deployed and/or instantiated machine-learning model and/or algorithm may receive inputs from any other process, module, and/or component described in this disclosure, and produce outputs to any other process, module, and/or component described in this disclosure.

Continuing to refer to FIG. 5, any process of training, retraining, deployment, and/or instantiation of any machine-learning model and/or algorithm may be performed and/or repeated after an initial deployment and/or instantiation to correct, refine, and/or improve the machine-learning model and/or algorithm. Such retraining, deployment, and/or instantiation may be performed as a periodic or regular process, such as retraining, deployment, and/or instantiation at regular elapsed time periods, after some measure of volume such as a number of bytes or other measures of data processed, a number of uses or performances of processes described in this disclosure, or the like, and/or according to a software, firmware, or other update schedule. Alternatively or additionally, retraining, deployment, and/or instantiation may be event-based, and may be triggered, without limitation, by user inputs indicating sub-optimal or otherwise problematic performance and/or by automated field testing and/or auditing processes, which may compare outputs of machine-learning models and/or algorithms, and/or errors and/or error functions thereof, to any thresholds, convergence tests, or the like, and/or may compare outputs of processes described herein to similar thresholds, convergence tests or the like. Event-based retraining, deployment, and/or instantiation may alternatively or additionally be triggered by receipt and/or generation of one or more new training examples; a number of new training examples may be compared to a preconfigured threshold, where exceeding the preconfigured threshold may trigger retraining, deployment, and/or instantiation.

Still referring to FIG. 5, retraining and/or additional training may be performed using any process for training described above, using any currently or previously deployed version of a machine-learning model and/or algorithm as a starting point. Training data for retraining may be collected, preconditioned, sorted, classified, sanitized or otherwise processed according to any process described in this disclosure. Training data may include, without limitation, training examples including inputs and correlated outputs used, received, and/or generated from any version of any system, module, machine-learning model or algorithm, apparatus, and/or method described in this disclosure; such examples may be modified and/or labeled according to user feedback or other processes to indicate desired results, and/or may have actual or measured results from a process being modeled and/or predicted by system, module, machine-learning model or algorithm, apparatus, and/or method as "desired" results to be compared to outputs for training processes as described above.

Redeployment may be performed using any reconfiguring and/or rewriting of reconfigurable and/or rewritable circuit and/or memory elements; alternatively, redeployment may be performed by production of new hardware and/or software components, circuits, instructions, or the like, which may be added to and/or may replace existing hardware and/or software components, circuits, instructions, or the like.

Further referring to FIG. 5, one or more processes or algorithms described above may be performed by at least a dedicated hardware unit 536. A "dedicated hardware unit," for the purposes of this figure, is a hardware component, circuit, or the like, aside from a principal control circuit and/or processor performing method steps as described in this disclosure, that is specifically designated or selected to perform one or more specific tasks and/or processes described in reference to this figure, such as without limitation preconditioning and/or sanitization of training data and/or training a machine-learning algorithm and/or model. A dedicated hardware unit 536 may include, without limitation, a hardware unit that can perform iterative or massed calculations, such as matrix-based calculations to update or tune parameters, weights, coefficients, and/or biases of machine-learning models and/or neural networks, efficiently using pipelining, parallel processing, or the like; such a hardware unit may be optimized for such processes by, for instance, including dedicated circuitry for matrix and/or signal processing operations that includes, e.g., multiple arithmetic and/or logical circuit units such as multipliers and/or adders that can act simultaneously and/or in parallel or the like. Such dedicated hardware units 536 may include, without limitation, graphical processing units (GPUs), dedicated signal processing modules, FPGA or other reconfigurable hardware that has been configured to instantiate parallel processing units for one or more specific tasks, or the like, A computing device, processor, apparatus, or module may be configured to instruct one or more dedicated hardware units 536 to perform one or more operations described herein, such as evaluation of model and/or algorithm outputs, one-time or iterative updates to parameters, coefficients, weights, and/or biases, and/or any other operations such as vector and/or matrix operations as described in this disclosure.

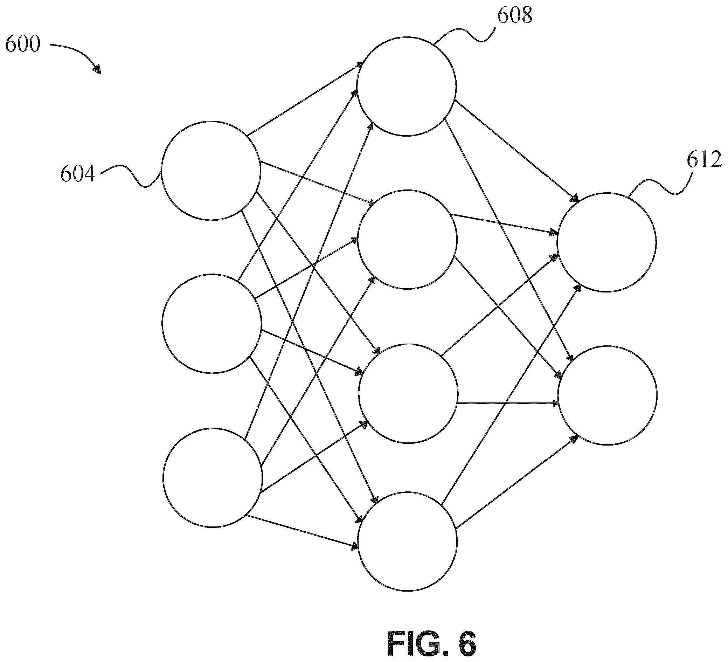

Referring now to FIG. 6, an exemplary embodiment of neural network 600 is illustrated. A neural network 600 also known as an artificial neural network, is a network of "nodes," or data structures having one or more inputs, one or more outputs, and a function determining outputs based on inputs. Such nodes may be organized in a network, such as without limitation a convolutional neural network, including an input layer of nodes 604, one or more intermediate layers 608, and an output layer of nodes 612. Connections between nodes may be created via the process of "training" the network, in which elements from a training dataset are applied to the input nodes, a suitable training algorithm (such as Levenberg-Marquardt, conjugate gradient, simulated annealing, or other algorithms) is then used to adjust the connections and weights between nodes in adjacent layers of the neural network to produce the desired values at the output nodes. This process is sometimes referred to as deep learning. Connections may run solely from input nodes toward output nodes in a "feed-forward" network, or may feed outputs of one layer back to inputs of the same or a different layer in a "recurrent network." As a further non-limiting example, a neural network may include a convolutional neural network comprising an input layer of nodes, one or more intermediate layers, and an output layer of nodes. A "convolutional neural network," as used in this disclosure, is a neural network in which at least one hidden layer is a convolutional layer that convolves inputs to that layer with a subset of inputs known as a "kernel," along with one or more additional layers such as pooling layers, fully connected layers, and the like.

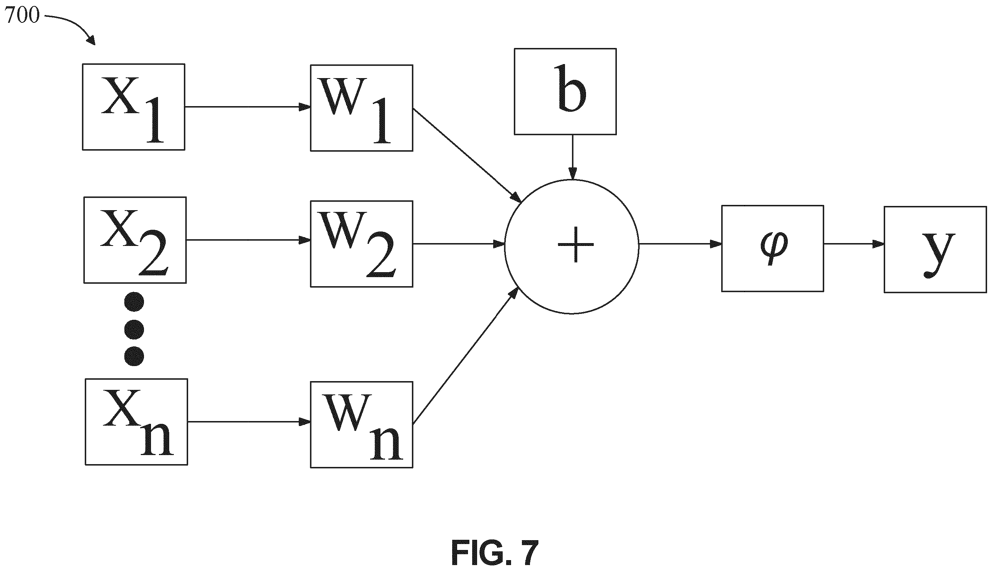

Referring now to FIG. 7, an exemplary embodiment of a node 700 of a neural network is illustrated. A node may include, without limitation a plurality of inputs $x_i$ that may receive numerical values from inputs to a neural network containing the node and/or from other nodes. Node may perform one or more activation functions to produce its output given one or more inputs, such as without limitation computing a binary step function comparing an input to a threshold value and outputting either a logic 1 or logic 0 output or something equivalent, a linear activation function whereby an output is directly proportional to the input, and/or a non-linear activation function, wherein the output is not proportional to the input. Non-linear activation functions may include, without limitation, a sigmoid function of the form $f(x) = \frac{1}{1-e^{-x}}$ given input $x$, a tanh (hyperbolic tangent) function, of the form $\frac{e^x - e^{-x}}{e^x + e^{-x}}$, a tanh derivative function such as $f(x) = \tanh^2(x)$, a rectified linear unit function such as $f(x) = \max(0, x)$, a "leaky" and/or "parametric" rectified linear unit function such as $f(x) = \max(ax, x)$ for some $a$, an exponential linear units function such as

$$f(x) = \begin{cases} x \ for \ x \geq 0 \\ \alpha(e^x - 1) \ for \ x < 0 \end{cases}$$ for some value

of $\alpha$ (this function may be replaced and/or weighted by its own derivative in some embodiments), a softmax function such as $f(x_i) = \frac{e^x}{\sum_i x_i}$ where the inputs to an instant layer are $x_i$, a swish function such as $f(x) = x * sigmoid(x)$, a Gaussian error linear unit function such as

$$f(x) = a\left(1 + \tanh\left(\sqrt{2/\pi}(x + bx^r)\right)\right)$$ for some values of a, b, and r, and/or a scaled exponential linear unit function such as

$$f(x) = \lambda \begin{cases} \alpha(e^x - 1) \ for \ x < 0 \\ x \ for \ x \geq 0 \end{cases}$$ . Fundamen-

tally, there is no limit to the nature of functions of inputs $x_i$ that may be used as activation functions. As a non-limiting and illustrative example, node may perform a weighted sum of inputs using weights $w_i$ that are multiplied by respective inputs $x_i$. Additionally or alternatively, a bias $b$ may be added to the weighted sum of the inputs such that an offset is added to each unit in the neural network layer that is independent of the input to the layer. The weighted sum may then be input into a function $\varphi$, which may generate one or more outputs $y$. Weight $w_i$ applied to an input $x_i$ may indicate whether the input is "excitatory," indicating that it has strong influence on the one or more outputs $y$, for instance by the corresponding weight having a large numerical value, and/or a "inhibitory," indicating it has a weak effect influence on the one more inputs $y$, for instance by the corresponding weight having a small numerical value. The values of weights $w_i$ may be determined by training a neural network using training data, which may be performed using any suitable process as described above.

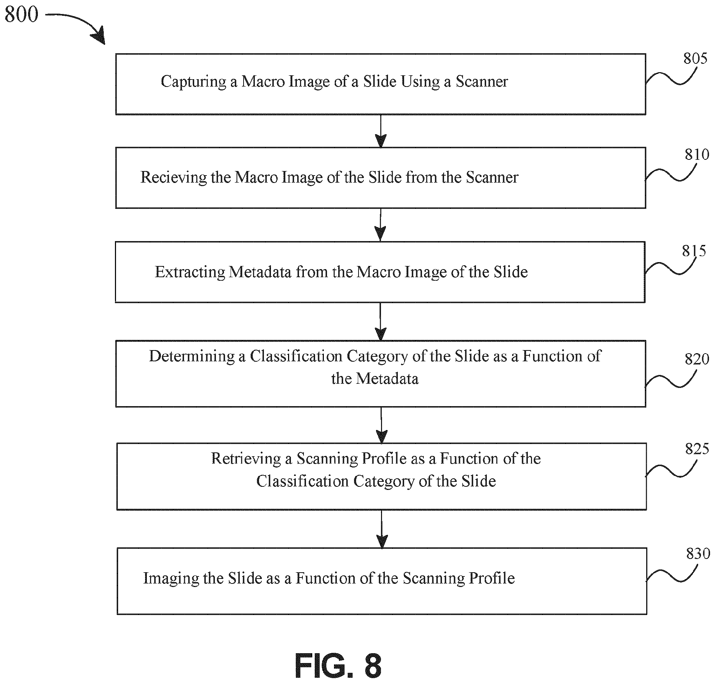

Referring now to FIG. 8, a flow diagram of a method 800 for adaptive slide imaging using a selected scanning profile is shown. Method 800 includes a step 805 of capturing, using a scanner, a macro image of a slide. This may be implemented as disclosed with reference to FIGS. 1-7.

With continued reference to FIG. 8, method 800 includes a step 810 of receiving, using at least a processor, the macro image of the slide from the scanner. This may be implemented as disclosed with reference to FIGS. 1-7.

With continued reference to FIG. 8, method 800 includes a step 815 of extracting, using the at least a processor, metadata from the macro image of the slide. This may be implemented as disclosed with reference to FIGS. 1-7.

With continued reference to FIG. 8, method 800 includes a step 820 of determining, using the at least a processor, a classification category of the slide as a function of the metadata. This may be implemented as disclosed with reference to FIGS. 1-7.

With continued reference to FIG. 8, method 800 includes a step 825 of retrieving, using the at least a processor, a scanning profile as a function of the classification category of the slide. This may be implemented as disclosed with reference to FIGS. 1-7.

With continued reference to FIG. 8, method 800 includes a step 830 of imaging, using the scanner, the slide as a function of the scanning profile. This may be implemented as disclosed with reference to FIGS. 1-7.

It is to be noted that any one or more of the aspects and embodiments described herein may be conveniently implemented using one or more machines (*e.g.*, one or more computing devices that are utilized as a user computing device for an electronic document, one or more server devices, such as a document server, etc.) programmed according to the teachings of the present specification, as will be apparent to those of ordinary skill in the computer art. Appropriate software coding can readily be prepared by skilled programmers based on the teachings of the present disclosure, as will be apparent to those of ordinary skill in the software art. Aspects and implementations discussed above employing software and/or software modules may also include appropriate hardware for assisting in the implementation of the machine executable instructions of the software and/or software module.

Such software may be a computer program product that employs a machine-readable storage medium. A machine-readable storage medium may be any medium that is capable of storing and/or encoding a sequence of instructions for execution by a machine (*e.g.*, a computing device) and that causes the machine to perform any one of the methodologies and/or embodiments described herein. Examples of a machine-readable storage medium include, but are not limited to, a magnetic disk, an optical disc (*e.g.,* CD, CD-R, DVD, DVD-R, etc.), a magnetooptical disk, a read-only memory "ROM" device, a random access memory "RAM" device, a magnetic card, an optical card, a solid-state memory device, an EPROM, an EEPROM, and any combinations thereof. A machine-readable medium, as used herein, is intended to include a single medium as well as a collection of physically separate media, such as, for example, a collection of compact discs or one or more hard disk drives in combination with a computer memory. As used herein, a machine-readable storage medium does not include transitory forms of signal transmission.

Such software may also include information (*e.g.*, data) carried as a data signal on a data carrier, such as a carrier wave. For example, machine-executable information may be included as a data-carrying signal embodied in a data carrier in which the signal encodes a sequence of instruction, or portion thereof, for execution by a machine (*e.g.*, a computing device) and any related information (*e.g.*, data structures and data) that causes the machine to perform any one of the methodologies and/or embodiments described herein.

Examples of a computing device include, but are not limited to, an electronic book reading device, a computer workstation, a terminal computer, a server computer, a handheld device (*e.g.,* a tablet computer, a smartphone, etc.), a web appliance, a network router, a network switch, a network bridge, any machine capable of executing a sequence of instructions that specify an action to be taken by that machine, and any combinations thereof. In one example, a computing device may include and/or be included in a kiosk.

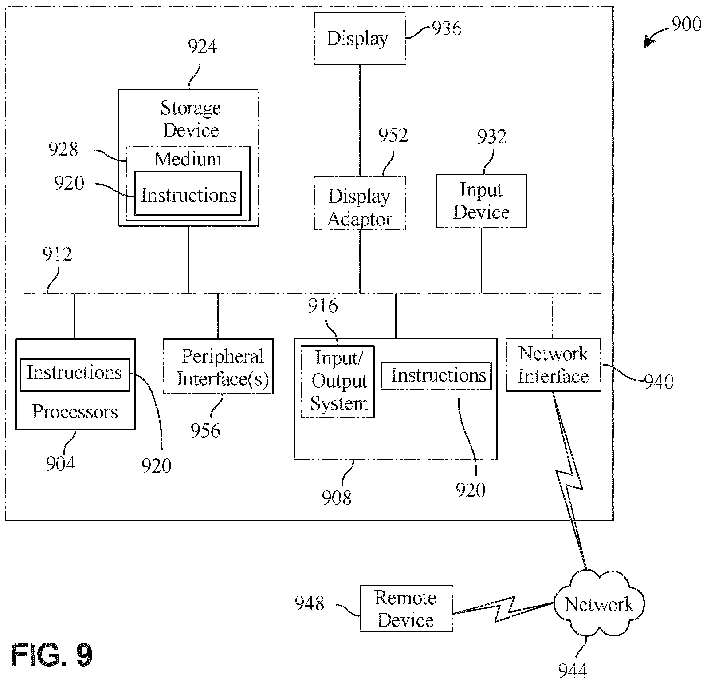

FIG. 9 shows a diagrammatic representation of one embodiment of a computing device in the exemplary form of a computer system 900 within which a set of instructions for causing a control system to perform any one or more of the aspects and/or methodologies of the present disclosure may be executed. It is also contemplated that multiple computing devices may be utilized to implement a specially configured set of instructions for causing one or more of the devices to perform any one or more of the aspects and/or methodologies of the present disclosure. Computer system 900 includes a processor 904 and a memory 908 that communicate with each other, and with other components, via a bus 912. Bus 912 may include any of several types of bus structures including, but not limited to, a memory bus, a memory controller, a peripheral bus, a local bus, and any combinations thereof, using any of a variety of bus architectures.

Processor 904 may include any suitable processor, such as without limitation a processor incorporating logical circuitry for performing arithmetic and logical operations, such as an arithmetic and logic unit (ALU), which may be regulated with a state machine and directed by operational inputs from memory and/or sensors; processor 904 may be organized according to Von Neumann and/or Harvard architecture as a non-limiting example. Processor 904 may include, incorporate, and/or be incorporated in, without limitation, a microcontroller, microprocessor, digital signal processor (DSP), Field Programmable Gate Array (FPGA), Complex Programmable Logic Device (CPLD), Graphical Processing Unit (GPU), general purpose GPU, Tensor Processing Unit (TPU), analog or mixed signal processor, Trusted Platform Module (TPM), a floating point unit (FPU), system on module (SOM), and/or system on a chip (SoC).

Memory 908 may include various components (*e.g.*, machine-readable media) including, but not limited to, a random-access memory component, a read only component, and any combinations thereof. In one example, a basic input/output system 916 (BIOS), including basic routines that help to transfer information between elements within computer system 900, such as during start-up, may be stored in memory 908. Memory 908 may also include (*e.g.,* stored on one or more machine-readable media) instructions (*e.g.*, software) 920 embodying any one or more of the aspects and/or methodologies of the present disclosure. In another example, memory 908 may further include any number of program modules including, but not limited to, an operating system, one or more application programs, other program modules, program data, and any combinations thereof.

Computer system 900 may also include a storage device 924. Examples of a storage device (*e.g.*, storage device 924) include, but are not limited to, a hard disk drive, a magnetic disk drive, an optical disc drive in combination with an optical medium, a solid-state memory device, and any combinations thereof. Storage device 924 may be connected to bus 912 by an appropriate interface (not shown). Example interfaces include, but are not limited to, SCSI, advanced technology attachment (ATA), serial ATA, universal serial bus (USB), IEEE 1394 (FIREWIRE), and any combinations thereof. In one example, storage device 924 (or one or more components thereof) may be removably interfaced with computer system 900 (*e.g.,* via an external port connector (not shown)). Particularly, storage device 924 and an associated machine-readable medium 928 may provide nonvolatile and/or volatile storage of machine-readable instructions, data structures, program modules, and/or other data for computer system 900. In one example, software 920 may reside, completely or partially, within machine-readable medium 928. In another example, software 920 may reside, completely or partially, within processor 904.

Computer system 900 may also include an input device 932. In one example, a user of computer system 900 may enter commands and/or other information into computer system 900 via input device 932. Examples of an input device 932 include, but are not limited to, an alpha-numeric input device (*e.g.*, a keyboard), a pointing device, a joystick, a gamepad, an audio input device (*e.g.*, a microphone, a voice response system, etc.), a cursor control device (*e.g.*, a mouse), a touchpad, an optical scanner, a video capture device (*e.g.*, a still camera, a video camera), a touchscreen, and any combinations thereof. Input device 932 may be interfaced to bus 912 via any of a variety of interfaces (not shown) including, but not limited to, a serial interface, a parallel interface, a game port, a USB interface, a FIREWIRE interface, a direct interface to bus 912, and any combinations thereof. Input device 932 may include a touch screen interface that may be a part of or separate from display 936, discussed further below. Input device 932 may be utilized as a user selection device for selecting one or more graphical representations in a graphical interface as described above.

A user may also input commands and/or other information to computer system 900 via storage device 924 (*e.g.,* a removable disk drive, a flash drive, etc.) and/or network interface device 940. A network interface device, such as network interface device 940, may be utilized for connecting computer system 900 to one or more of a variety of networks, such as network 944, and one or more remote devices 948 connected thereto. Examples of a network interface device include, but are not limited to, a network interface card (*e.g.,* a mobile network interface card, a LAN card), a modem, and any combination thereof. Examples of a network include, but are not limited to, a wide area network (*e.g.*, the Internet, an enterprise network), a local area network (*e.g.*, a network associated with an office, a building, a campus or other relatively small geographic space), a telephone network, a data network associated with a telephone/-voice provider (*e.g.*, a mobile communications provider data and/or voice network), a direct connection between two computing devices, and any combinations thereof. A network, such as network 944, may employ a wired and/or a wireless mode of communication. In general, any network topology may be used. Information (*e.g.*, data, software 920, etc.) may be communicated to and/or from computer system 900 via network interface device 940.

Computer system 900 may further include a video display adapter 952 for communicating a displayable image to a display device, such as display device 936. Examples of a display device include, but are not limited to, a liquid crystal display (LCD), a cathode ray tube (CRT), a plasma display, a light emitting diode (LED) display, and any combinations thereof. Display adapter 952 and display device 936 may be utilized in combination with processor 904 to provide graphical representations of aspects of the present disclosure. In addition to a display device, computer system 900 may include one or more other peripheral output devices including, but not limited to, an audio speaker, a printer, and any combinations thereof. Such peripheral output devices may be connected to bus 912 via a peripheral interface 956. Examples of a peripheral interface include, but are not limited to, a serial port, a USB connection, a FIREWIRE connection, a parallel connection, and any combinations thereof.

The foregoing has been a detailed description of illustrative embodiments of the invention. Various modifications and additions can be made without departing from the scope of this invention. Features of each of the various embodiments described above may be combined with features of other described embodiments as appropriate in order to provide a multiplicity of feature combinations in associated new embodiments. Furthermore, while the foregoing describes a number of separate embodiments, what has been described herein is merely illustrative of the application of the principles of the present invention. Additionally, although particular methods herein may be illustrated and/or described as being performed in a specific order, the ordering is highly variable within ordinary skill to achieve methods, systems, and software according to the present disclosure. Accordingly, this description is meant to be taken only by way of example, and not to otherwise limit the scope of this invention.

Exemplary embodiments have been disclosed above and illustrated in the accompanying drawings. It will be understood by those skilled in the art that various changes, omissions and additions may be made to that which is specifically disclosed herein without departing from the scope of the present invention.

**Claims**

1. An apparatus (100) for adaptive slide imaging using a selected scanning profile, the apparatus comprising:

   a scanner (109) configured to capture a macro image of a slide (112), wherein the scanner comprises:

   a stage (111) configured to hold the slide;
   an optical sensor (113) configured to convert an image into one or more electrical signals; and
   an optical system (110) configured to form the image of the slide on the optical sensor, wherein the stage is configured to move the slide relative to the optical system;

   at least a processor (104); and
   a memory (108), wherein the memory contains instructions configuring the at least a processor to:

   receive the macro image of the slide from the scanner;
   extract metadata from the macro image of the slide;
   determine a classification category of the slide as a function of the metadata;
   retrieve a scanning profile as a function of the classification category of the slide; and
   image, using the optical system and optical sensor of the scanner, the slide as a function of the scanning profile.

2. The apparatus of claim 1, wherein retrieving the scanning profile as a function of the classification category of the slide comprises:

   selecting the scanning profile from a plurality of scanning profiles as a function of the classification category and a plurality of selection weights corresponding the plurality of scanning profiles;
   incrementing a utilization datum of the selected scanning profile; and
   updating a selection weight of the selected scanning profile.

3. The apparatus of claim 1 or claim 2, wherein determining the classification category of the slide as a function of the metadata comprises:

   identifying one or more fiducials on the macro image using an image processing algorithm; and
   determining the classification category of the slide as a function of the one or more fiducials.

4. The apparatus of claim 3, wherein imaging the slide as a function of the scanning profile comprises:

   training a region machine-learning model using region training data, wherein the region training data comprises slide images correlated to labeled regions;
   detecting, using a region machine-learning model, a region of interest of the slide using the macro image, wherein region of interest encompasses one or more fiducials bounding a pathology sample; and
   imaging a high-magnification image of the region of interest using the optical system and optical sensor of the scanner.

5. The apparatus of any preceding claim, wherein:

   extracting the metadata from the macro image of the slide comprises determining a circularity of a pathology sample of the slide using an image processing algorithm; and
   determining the classification category of the slide as a function of the metadata comprises determining the classification category of the slide as a function of of the circularity of the pathology sample.

6. The apparatus of any preceding claim, wherein: extracting the metadata from the macro image of the slide comprises extracting textual

   data from a label of the slide using optical character recognition; and determining the classification category of the slide as a function of the metadata comprises determining the classification category of the slide as a function of the textual data.

7. The apparatus of claim 6, wherein determining the classification category of the slide as a function of the textual data comprises:

extracting one or more keywords from the textual data using a natural language processing algorithm; and
determining the classification category of the slide as a function of the one or more keywords.

8. The apparatus of any preceding claim, wherein:

the scanning profile comprises:

a magnification parameter; and
a z-stack layer parameter; and

the memory contains instructions further configuring the at least a processor to image the slide using the scanner as a function of the magnification parameter and the z-stack layer parameter.

9. A method for adaptive slide imaging using a selected scanning profile, the method comprising:

capturing (805), using a scanner (109), a macro image of a slide (112), wherein the scanner comprises:

a stage (111) configured to hold the slide;
an optical sensor (113) configured to convert an image into one or more electrical signals; and
an optical system (110) configured to form the image of the slide on the optical sensor, wherein the stage is configured to move the slide relative to the optical system;

receiving (810), using at least a processor, the macro image of the slide from the scanner;
extracting (815), using the at least a processor, metadata from the macro image of the slide;
determining (820), using the at least a processor, a classification category of the slide as a function of the metadata;
retrieving (825), using the at least a processor, a scanning profile as a function of the classification category of the slide; and
imaging (830), using the optical system and optical sensor of the scanner, the slide as a function of the scanning profile.

10. The method of claim 9, wherein retrieving the scanning profile as a function of the classification category of the slide comprises:

selecting the scanning profile from a plurality of scanning profiles as a function of the classification category and a plurality of selection weights corresponding the plurality of scanning profiles;
incrementing a utilization datum of the selected scanning profile; and
updating a selection weight of the selected scanning profile.

11. The method of claim 9 or claim 10, wherein determining the classification category of the slide as a function of the metadata comprises:

identifying one or more fiducials on the macro image using an image processing algorithm; and
determining the classification category of the slide as a function of the one or more fiducials.

12. The method of claim 11, wherein imaging the slide as a function of the scanning profile comprises:

training a region machine-learning model using region training data, wherein the region training data comprises slide images correlated to labeled regions;
detecting, using a region machine-learning model, a region of interest of the slide using the macro image, wherein region of interest encompasses one or more fiducials bounding a pathology sample; and
imaging a high-magnification image of the region of interest using the optical system and optical sensor of the scanner.

13. The method of any of claims 9 to 12, wherein:

extracting the metadata from the macro image of the slide comprises determining a circularity of a pathology sample of the slide using an image processing algorithm; and
determining the classification category of the slide as a function of the metadata comprises determining the classification category of the slide as a function of the circularity of the pathology sample.

14. The method of any of claims 9 to 13, wherein:

extracting the metadata from the macro image of the slide comprises extracting textual data from a label of the slide using optical character recognition and the macro image; and
determining the classification category of the slide as a function of the metadata comprises determining the classification category of the slide as a function of the textual data.

**15.** The method of claim 14, wherein determining the classification category of the slide as a function of the textual data comprises:

extracting one or more keywords from the textual data using a natural language processing algorithm; and
determining the classification category of the slide as a function of the one or more keywords.

EP 4 682 613 A1

**Slide 112**
Label 120
Pathology Sample 124

100

**Scanner 109**
Optical Sensor 113
Optical System 110
Stage 111

Image 114
Macro Image 116
High-Magnification Image 118

API(s) 160

**Processor 104**

Image 114
Macro Image 116
High-Magnification Image 118

Memory 108

Optical Character Recognition 134

Natural Language Processing 142

Image Processing Algorithm 130

Metadata 126
Circularity 128
Textual Data 132
Unique Identifier 122
Fiducials 136

Region of Interest 156

Region Machine-learning Model 158

Keyword 144

Category Classifier 140

Classification Category 138

Selected Scanning Profile 146

Utilization Datum 152

Selection Weight 150

Plurality of Scanning Profiles 148

Scanning Profile Database 154

**FIG. 1**

200

Scanning Profile 204

Static Profile 208

Dynamic Profile 212

Factory Profile 224

User Set Profile 228

Label Metadata-Based Profile 220

Macro Image Analysis-Based Profile 216

**FIG. 2**

FIG. 3

FIG. 4

FIG. 5

**FIG. 6**

FIG. 7

FIG. 8

**FIG. 9**

EP 4 682 613 A1

Europäisches Patentamt
European Patent Office
Office européen des brevets

# EUROPEAN SEARCH REPORT

Application Number

EP 25 18 8279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/206096 A1 (COOKE JEREMY [GB] ET AL) 6 September 2007 (2007-09-06) | 1-7,9-15 | INV. G02B21/34 |
| A | * paragraphs [0039] - [0041], [0069] - [0071]; figures 2, 7 * | 8 | G02B21/00 G06T7/00 |
| | ----- | | G02B21/36 |
| X | US 2016/139387 A1 (VIRK AUDIL [CA] ET AL) 19 May 2016 (2016-05-19) | 1-7,9-15 | G06V10/00 |
| A | * paragraphs [0006] - [0011]; figure 1 * | 8 | |
| | ----- | | |
| X | US 2021/364774 A1 (SHIBATA MOTOHIRO [JP] ET AL) 25 November 2021 (2021-11-25) | 1-15 | |
| | * paragraphs [0035] - [0043], [0063] - [0066]; figures 1, 2, 4 * | | |
| | ----- | | |
| X | US 2005/282292 A1 (TORRE-BUENO JOSE D L [US]) 22 December 2005 (2005-12-22) | 1-15 | |
| | * paragraphs [0088] - [0090], [0123] - [0124]; figures 2, 4 * | | |
| | ----- | | |
| X | US 2003/012420 A1 (VERWOERD NICO PETER [NL] ET AL) 16 January 2003 (2003-01-16) | 1-7,9-15 | |
| A | * paragraphs [0028] - [0036], [0039]; figures 1, 2 * | 8 | TECHNICAL FIELDS SEARCHED (IPC) |
| | ----- | | G02B |
| A | US 2021/018742 A1 (STUMPE MARTIN [US]) 21 January 2021 (2021-01-21) * the whole document * | 1-15 | G06V |
| | ----- | | |
| A | US 2021/090238 A1 (GALLAGHER-GRUBER JORDAN [AU] ET AL) 25 March 2021 (2021-03-25) * the whole document * | 1-15 | |
| | ----- | | |
| A | EP 3 611 513 A1 (HAMAMATSU PHOTONICS KK [JP]) 19 February 2020 (2020-02-19) * the whole document * | 1-15 | |
| | ----- | | |
| | -/-- | | |

The present search report has been drawn up for all claims

| Place of search | Date of completion of the search | Examiner |
|---|---|---|
| Munich | 4 December 2025 | Maria, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 25 18 8279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/233647 A1 (JENOSKI RAYMOND [US] ET AL) 29 July 2021 (2021-07-29) * the whole document * ----- | 1-15 | |
| A | ZARELLA MARK D ET AL: "High-throughput whole-slide scanning to enable large-scale data repository building", THE JOURNAL OF PATHOLOGY, [Online] vol. 257, no. 4, 8 June 2022 (2022-06-08), pages 383-390, XP093200746, Hoboken, USA ISSN: 0022-3417, DOI: 10.1002/path.5923 Retrieved from the Internet: URL:https://onlinelibrary.wiley.com/doi/full-xml/10.1002/path.5923> [retrieved on 2025-12-04] * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 4 December 2025 | Maria, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 18 8279

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2025

| Patent document cited in search report | | Publication date | Patent family member(s) | | Publication date |
|---|---|---|---|---|---|
| US 2007206096 | A1 | 06-09-2007 | AT | E498147 T1 | 15-02-2011 |
| | | | EP | 1830216 A1 | 05-09-2007 |
| | | | ES | 2361054 T3 | 13-06-2011 |
| | | | JP | 4917329 B2 | 18-04-2012 |
| | | | JP | 2007233093 A | 13-09-2007 |
| | | | US | 2007206096 A1 | 06-09-2007 |
| US 2016139387 | A1 | 19-05-2016 | CA | 2916768 A1 | 31-12-2014 |
| | | | EP | 3014331 A1 | 04-05-2016 |
| | | | US | 2016139387 A1 | 19-05-2016 |
| | | | WO | 2014205557 A1 | 31-12-2014 |
| US 2021364774 | A1 | 25-11-2021 | CN | 113703149 A | 26-11-2021 |
| | | | JP | 7506523 B2 | 26-06-2024 |
| | | | JP | 2021183993 A | 02-12-2021 |
| | | | US | 2021364774 A1 | 25-11-2021 |
| US 2005282292 | A1 | 22-12-2005 | AU | 2003245499 A1 | 31-12-2003 |
| | | | US | 2004009098 A1 | 15-01-2004 |
| | | | US | 2005282292 A1 | 22-12-2005 |
| | | | WO | 03106157 A2 | 24-12-2003 |
| US 2003012420 | A1 | 16-01-2003 | EP | 1402461 A1 | 31-03-2004 |
| | | | US | 2003012420 A1 | 16-01-2003 |
| | | | WO | 02101635 A1 | 19-12-2002 |
| US 2021018742 | A1 | 21-01-2021 | EP | 3776458 A1 | 17-02-2021 |
| | | | JP | 2021515240 A | 17-06-2021 |
| | | | US | 2021018742 A1 | 21-01-2021 |
| | | | WO | 2019199392 A1 | 17-10-2019 |
| US 2021090238 | A1 | 25-03-2021 | AU | 2019260856 A1 | 17-12-2020 |
| | | | CA | 3098154 A1 | 31-10-2019 |
| | | | CN | 112352149 A | 09-02-2021 |
| | | | EP | 3785021 A1 | 03-03-2021 |
| | | | JP | 2021522487 A | 30-08-2021 |
| | | | JP | 2024069188 A | 21-05-2024 |
| | | | US | 2021090238 A1 | 25-03-2021 |
| | | | WO | 2019204854 A1 | 31-10-2019 |
| EP 3611513 | A1 | 19-02-2020 | CN | 110520739 A | 29-11-2019 |
| | | | DK | 3611513 T3 | 21-05-2024 |
| | | | EP | 3611513 A1 | 19-02-2020 |
| | | | JP | 6889009 B2 | 18-06-2021 |
| | | | JP | 7216753 B2 | 01-02-2023 |
| | | | JP | 2018180281 A | 15-11-2018 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 18 8279

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2025

| Patent document cited in search report | Publication date | Patent family member(s) | | Publication date |
|---|---|---|---|---|
| | | JP | 2021099354 A | 01-07-2021 |
| | | US | 2020011889 A1 | 09-01-2020 |
| | | US | 2021231695 A1 | 29-07-2021 |
| | | WO | 2018190055 A1 | 18-10-2018 |
| US 2021233647 A1 | 29-07-2021 | NONE | | |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 22605823
- US 38238623
- US 226058
- US 66068724
- US 64713824
- US 73681824
- US 60294724 A